# EUROPEAN PATENT SPECIFICATION

(11) **EP 0 575 564 B1**
(45) Date of publication and mention of the grant of the patent: **10.09.1997**
(21) Application number: 92917283.1
(22) Date of filing: 16.03.1992
(51) Int. Cl.: B65G 37/00, B65G 47/51

(54) **ACCUMULATOR HAVING SURGE CONTROL**
SPEICHER MIT ÜBERLASTUNGSSTEUERUNG
ACCUMULATEUR A COMMANDE DE SURCHARGE

(30) Priority: 15.03.1991 US 669744
(43) Date of publication of application: 29.12.1993
(73) Proprietor: HARTNESS INTERNATIONAL, INC., Greenville South Carolina 29616-1509 (US)
(72) Inventor: STEEBER, Dorian, F., Taylors, SC 29687 (US)
(74) Representative: Harvey, David Gareth
(86) International application number: US9202053
(87) International publication number: WO9216440

(56) References cited:
- US-A- 3 762 582
- US-A- 4 220 236
- US-A- 4 274 530
- US-A- 4 499 987
- US-A- 4 711 336
- US-A- 4 830 170
- US-A- 4 989 718
- US-A- 5 038 909

## Description

### BACKGROUND OF THE INVENTION

The present invention in general concerns improved surge control (i.e., accumulator) apparatus and method, and more particularly concerns improved method and apparatus for providing accumulator operations which positively prevent the occurrence of product shear points, regardless of variations in the exact sizes of products from their nominal size, or the initial position of the products relative the conveyor prior to a product removal operation.

US-A-4,989,718 ("Steeber"), published 5^{th} April 1991 discloses a method of surge control for products being transported on a conveyor belt and an apparatus for product handling according to the preambles of claims 1 and 22, respectively.

A long-term problem in production line operations is to ensure smooth and continuous operation of the production line and components thereof. However, it is well known and widely experienced that various components or workstations along the conveyor or production line may operate at different rates of speed, thereby resulting in a blockage or queue of products developing at one or more points along the production line. In general, the foregoing problem has been addressed by the addition of accumulator means for temporarily removing and storing products backing up along a production line or conveyor. However, the presence of such devices also in some respects creates an additional component which is subject to breaking down or causing other problems relative the production line. If such occurs, the accumulator means very undesirably becomes a liability to the production line or conveyor rather than the asset and advantage which was intended.

The improved accumulator means of Steeber advantageously addresses many of the general problems of accumulator operations so as to minimize mishandling of products which can result in highly undesirable failed operations of the accumulator. However, one more specific problem faced during accumulator operations is the accommodation of unpredictable variations in the sizes (from their nominal size) of individual products being handled, particularly where such variations cumulatively result in highly significant dimensions relative a line (or slug) of products to be removed from a conveyor. The advantageous methodology and apparatus of the above-referenced Steeber patent inherently may accommodate cumulative variations of, for example, up to approximately 109 cm (3/4 of an inch) to perhaps an inch. Such degree of accommodation is entirely adequate in many circumstances. The greater difficulty comes in those situations where the cumulative variations exceed even such amount. When such an excessive situation develops, the result can be the existence of interference (i.e., product shear points) between fixed members of the accumulator and products remaining on the conveyor or being removed therefrom.

One example of an accumulator means which refers to the occurrence of product size variation is Mattei GB-A-2170169; published July 30, 1986). It is noted in lines 71 through 77 of page 1 of such publication that slight and unpredictable variations in the size of products can result in variation in the longitudinal dimension of the group of products to be removed such that the group projects beyond the end of an intended storage area resulting in interference with fixed components of the accumulator during storage operations. The Mattei apparatus intends to eliminate such problem by providing an extracting means for literally removing a potential trouble packet from the group of packets to be removed and stored.

The Mattei approach does not necessarily render a positive solution to the situation of excessive growth (or shrinkage). Another difficulty with such approach is the inherent limitation on any device which relies on (or expects) a product with which it interacts being located in a particularl place (within given tolerances). In other words, an extraction device or clamping arrangement of any type which mechanically operates at a predetermined point relative a conveyor can potentially fail to adequately grasp or retain (i.e., engage) an intended packet because of the initial position of such packet relative the mechanism. The result of a near miss can be the creation of an additional shear point or even damage or crushing of one or more packets. Worse case situations can include jamming of the device resulting in failure of the accumulator.

Another facet of the problem generally related to unintended and unpredictable variations in the size of specific packets is the considerable number of different factors which can cause such variations. In other words, such a large number of factors can cause variations that it is virtually impossible to adequately control or eliminate all such factors, wherefore the above-mentioned cumulative variation problem can not as a practical matter be prevented from occurring in an accumulator apparatus.

Using for example products of the type comprising an aseptic paper package filled with liquid (as generally discussed Steeber, the following factors are exemplary. In the accumulator operations described in Steeber, a slug of products can include a number such as 24, 27, or 30 packages. Variations of, for example, 0.08 cm (1/32 of an inch) per package can result in significant cumulative differences over the lengtht of the slug. With the accumulator mechanism of Steeber, products preferably are systematically held at the outfeed end of the accumulator; hence, the specific location of a product at the outfeed end is established with reasonable certainty. Accordingly, the greater problems of not knowing with certainty the location of a product occurs at the infeed side (i.e., upstream side) of the accumulator mechanism.

One potential variation in the above-mentioned exemplary type of product can occur in the paper being used to make the packages. If a given lot of paper is slightly thicker than a previous lot, the resulting sizes of the cartons will relatively increase, quickly giving rise to the cumulative dimensional problem discussed above. Likewise in the area of package formation, wear in the machine making the package can result in slightly different dimensions of a finished package. For example if the edge of a fold or creasing member wears over time, then the associated dimension of a package being formed will slightly change. In general, accumulator means of present constructions and types of operation must be adjusted over time to compensate for wear in the folding mechanisms or the like of such carton forming machines.

Another factor in the area of the paper itself is that shipments of paper from different sources can involve paper of the same thickness, but of slightly softer or slightly more rigid construction. The resulting difference in the finished package is seen as differences in the amount of package compression as they move along the production line, again creating the potential for adverse cumulative dimensional effects.

Another potential factor in the case of liquid filled containers is slight variation in the amount of volume being introduced into the container, which variations can cause the size of the packages to grow or shrink.

Even if the packages themselves are the same, other mechanical factors can affect the cumulative dimensions of a slug of packages. For example, as lubrication on the conveyor belt changes over the course of time, the coefficient of friction for a chain drive or the like for the conveyor may vary, which results in more or less axial (i.e., in the drive direction of the conveyor) compressive forces on the packages, again affecting the position of the packages at the infeed of an accumulator device. Such problem particularly may occur where the accumulator operations take place (as they often do) while the production line or conveyor continues to run. In such instance, the queue or slug of products simply are sliding relative the conveyor, which moves continuously. Accordingly, the potential compression of products is constantly a factor to consider.

Another example of a factor which is not strictly based on variations in the sizes of individual products is that one or more packages may occasionally become tipped while traveling on the conveyor belt. For many packages, the height of the package is greater than (or at least different from) the length of the package when in an upright position. Accordingly, if a package becomes tipped, there can be a considerable change in the cumulative dimension of a group of packages. For example, the occurrence of a single tipped package could be enough to cause a mechanism such as the extraction device of Mattei (GB-A-2170169) to entirely miss its intended package (or to grab two adjacent packages). Again, the general problem with such an approach to the overall technical problem is that a deficiency arises if the target or intended package is not precisely in its expected position.

In view of the numerous different factors which can cause or influence the problems associated with cumulative variations in a line or slug of products to be removed from a conveyor with an accumulator apparatus, it is not a practical solution to attempt to address and control all such factors individually so as to prevent the occurrence of the problem in the accumulator means. Nor is it an entirely satisfactory approach in every instance to address the overall problem with mechanisms which depend on the products being at an expected position (within certain limited deviations therefrom). Nor, in general, is it desirable to increase the complexity of existing accumulator devices since added complexity often results in additional breakdown problems, thereby further defeating the overall purpose of the accumulator device.

### SUMMARY OF THE INVENTION

The present invention recognizes and addresses various of the foregoing problems, and others, concerning accumulator operations. Thus, broadly speaking, a principal object of this invention is improved accumulator operations, including both improved apparatus and improved methodology. More particularly, a main object is improved method and apparatus for surge control of accumulator operations pertaining to the elimination of damage to products, such as occur, for example, from the existence of product shear points.

It is another present general object to provide apparatus and methodology which automatically and fully compensates for unpredictable variations in product sizes, which could otherwise adversely give rise to cumulative dimensional problems for a line or slug of products to be removed from a conveyor. It is a more specific object of the present invention to provide an apparatus which positively displaces a line of products to be removed by an amount adequate to eliminate product shear points, when operative in combination with stopping the infeed of products to the accumulator. It is another more specific object to provide for the infeed stopping or trapping of a correct product relative other accumulator operations to ensure that all products advancing therefrom towards the accumulator are safely received therein, advanced downstream beyond potential product shear points.

It is another present object to provide improved method and apparatus which results in products being removed undamaged from a conveyor belt by an accumulator device, regardless of the initial position of products relative to the accumulator apparatus whenever removing steps are commenced. It is a further present object to ensure that such products to be removed are isolated from line pressure along the conveyor while also being positively directed past potential product shear points regardless of their initial position, so as to prevent shear point damage thereto during their removal.

It is a still further present object to generally eliminate the deficiencies and shortcomings of prior art clamping mechanisms which rely on the presence of products at specific conveyor points, within generally limited tolerances or deviations therefrom. More specifically, it is an aspect of the invention to be able to trap or otherwise stop an appropriate product while permitting other products to continue downstream on the conveyor, rather than to blindly clamp any and all objects at a particular point on the conveyor, thus eliminating prior art difficulties wherein products are clamped in undesired manners or locations.

The present invention may be used with an improved adjustable outfeed shift apparatus, either for use with an accumulator means, or incorporated into the accumulator means, which is user adjustable for satisfying objects of the present invention to ensure an adequate downstream shifting of products to eliminate product shear points.

A pinchless infeed stop mechanism is also described which is useful with the present invention which advantageously interrupts travel of an appropriate product while not interrupting the travel of other products and which is operative without requiring the application of clamping force to the products.

It is another present object to achieve the foregoing improved method and apparatus for accumulator means without undesirably and disadvantageously increasing the complexity of the resulting apparatus. At the same time it is a present object to eliminate unnecessary pinch or clamping points for packages while still fully and automatically compensating for variations in package size regardless of what factor or factors cause or contribute to such variations.

It is still another general present object to safely and efficiently accumulate such a line or slug of products as can be accommodated in the accumulator mechanism without product shear point damage, without regard to the number of products actually contained in a given line or slug of such products.

Another present object is to provide the foregoing improved method and apparatus for accumulator operations which may be used with or incorporated into various existing accumulator means, or which advantageously may be used further in combination with the improved accumulator means and method as disclosed in the above-referenced Steeber.

Additional objects and advantages of the invention are set forth, or will be apparent to those of ordinary skill in the art, from the detailed description which follows. Also, it should be appreciated that modifications and variations to the specifically illustrated and discussed features hereof may be practiced in various embodiments and uses of this invention which is as claimed in the claims. Such variations may include, but are not limited to, substitution of equivalent means and features, materials, or steps, for those shown or discussed, and the functional or positional reversal of various parts, features, or steps, or the like.

Still further, it is to be understood that different embodiments, as well as different presently preferred embodiments, of this invention may include various combinations or configurations of presently disclosed steps, features, or their equivalents (including combinations of features or steps or configurations thereof not expressly shown or stated). One exemplary such embodiment of the present invention relates to a method of surge control for products being transported via a moving conveyor belt means in a predetermined downstream direction between two production areas. Such method includes providing an accumulator means with an upstream infeed and a downstream outfeed, and situated alongside the conveyor belt means intermediate the two production areas, which accumulator means is capable of controllably removing products from the conveyor belt means in the event of a backup of products being fed to the downstream production area. The subject method preferably further includes controllably removing products from the conveyor belt means with the accumulator device if a queue of products develops within the accumulator device between the outfeed and infeed thereof.

The foregoing removing step includes according to claim 1 establishing an infeed trapping point and engaging the leading edge of any product transported thereagainst by the conveyor belt means, such trapping point being situated along the conveyor belt means a predetermined distance upstream from the accumulator device infeed. The removing step further includes relatively shifting the queue of products an adequate distance downstream such that all products downstream of the infeed trapping point and not engaged thereat are transported downstream at least to the accumulator device infeed. In such fashion, products may be removed undamaged from the conveyor belt means by the accumulator means regardless of the relative position of products at the accumulator means infeed whenever the removing step commences.

Another present exemplary method of controlling the flow of products advancing along a conveyor involves the initiation of a particular product removal sequence in the context of operation of an accumulator means such as of the invention set forth in Steeber. In such an embodiment, the product removal sequence preferably includes setting a trap at an established upstream trapping point for the leading edge of the next product approaching the trapping point from the direction of an upstream workstation. It further includes relatively shifting the products within the apparatus queue an adequate distance downstream such that products in any portion downstream from the trapping point are shifted beyond the accumulator means infeed side shear point while products upstream from the trapping point become trapped thereat. Thereafter, the accumulator means may be operated for removing products from the conveyor within the apparatus. Meanwhile, products are isolated from line pressure along the conveyor and positively directed past potential product shear points regardless of their initial position.

Still further, the present method may advantageously include user-selected adjustment of the downstream shift distance, which itself may be related to the nominal length of individual products being advanced along the associated conveyor. Preferably such distance is equal to about the nominal product length added to the distance which the trapping point resides upstream from the accumulator means infeed side (or at least the accumulator means infeed side shear point).

An infeed product engagement apparatus is also described useful with the present invention and is, in particular, for use along a conveyor forming a pathway moving in a defined downstream direction between two workstations. Such conveyor preferably is feeding products through an accumulator means of the type which controllably removes a queue of products from the conveyor whenever there is a backup of products within the accumulator means.

The foregoing infeed product engagement apparatus comprises an interruption means for selectively interrupting product travel in at least a first part of the moving pathway of the conveyor situated relatively upstream from the accumulator means; and guide means, situated relatively upstream from the interruption means, for selectively guiding products carried on the conveyor into the pathway first part, so that downstream movement of such guided products is subsequently interrupted by the interruption means.

An outfeed product engagement apparatus useful with the present invention is also described which is for use with the above-referenced types of accumulator means and associated conveyor. Such outfeed product engagement apparatus comprises a controllable product engagement member, engagement actuation means, and shift actuation means.

The foregoing exemplary engagement actuation means is preferably for selectively positioning the product engagement member between a first position thereof relatively just downstream from the accumulator means and relatively adjacent the conveyor so as to stop the movement of products along the pathway thereof, and a second position thereof adequately displaced from the conveyor so as to not contact products thereon.

The foregoing shift actuation means is preferably for selectively shifting the product engagement member with products received thereagainst between the first position thereof, and a third position thereof relatively adjacent the conveyor so as to stop the movement of products therealong and downstream from the first position by a total shift distance comprised of a predetermined minimum shift distance added to the length of a product being moved on the conveyor, while feeding of products into the upstream end of the accumulator means is controlled. With such an arrangement, products to be removed from the conveyor with the accumulator means may be controllably shifted relative thereto prior to such removal so as to prevent product shear points between the accumulator means and such products and between the accumulator means and products remaining on the conveyor.

Still further embodiments of the subject invention relate to an improved accumulator means generally of the type having a vertically-oriented conveyor with a plurality of spaced outwardly extending veins for accumulating products therebetween, with indexing of such conveyor resulting in alternate removal or return of products relative a carrying surface of a production line. Such improved accumulator device in accordance with this invention includes output shift means and input product trapping means. The output shift means are preferably relatively adjacent the output of the accumulator device and operative for selectively shifting products a selected downstream distance. The input product trapping means are relatively adjacent the input of the accumulator device a selected upstream distance therefrom and operative for selectively capturing without use of clamping force the leading edge of the next product having its leading edge upstream therefrom. Such selected downstream distance comprises the nominal length of one of the production line products added to the selected upstream distance, so that cooperative actuation of the output shift means and the input product trapping means prevent the occurrence of product shear points adjacent input and output edges of the conveyor veins.

Further present exemplary method and apparatus also include product handling apparatus and method generally of the type described in Steeber, and variously incorporating or in combination with present method and apparatus features.

Those of ordinary skill in the art will better appreciate the features and aspects of such embodiments (both method and apparatus), and others, upon review of the remainder of the specification.

### BRIEF DESCRIPTION OF THE DRAWINGS

A full and enabling disclosure of the present invention (both method and apparatus for surge control of products being transported on a conveyor belt), including the best mode thereof, directed to one of ordinary skill in the art, is set forth in the remainder of the specification, which makes reference to the appended figures, in which:
Figure 1 is an isolated, perspective view of an exemplary embodiment of an infeed product engagement apparatus useful with the subject invention;
Figure 2 is a top plan view of the exemplary apparatus of present Figure 1, illustrated in relation to an exemplary conveyor and associated products carried thereon with which such apparatus may be practiced;
Figure 3 is a side elevational view of exemplary interruption means in accordance useful with the present invention, taken along the view line 3-3 as illustrated in present Figure 2;
Figure 4 is an isolated, perspective view (in partial cutaway) of an exemplary embodiment of an outfeed product engagement apparatus in accordance with the subject invention;
Figure 5 is a partial section, top view of the apparatus of Figure 4 further illustrated in combination with an exemplary conveyor and associated products with which such apparatus may be practiced; and
Figure 6 is an exemplary top diagrammatical view of exemplary apparatus in accordance with the subject invention, provided to facilitate discussion of the present methodology.
Repeat use of reference characters throughout the present specification and appended drawings is intended to represent same or analogous features, elements, or steps of the invention.

### DETAILED DESCRIPTION OF THE PREFERRED EMBODIMENTS

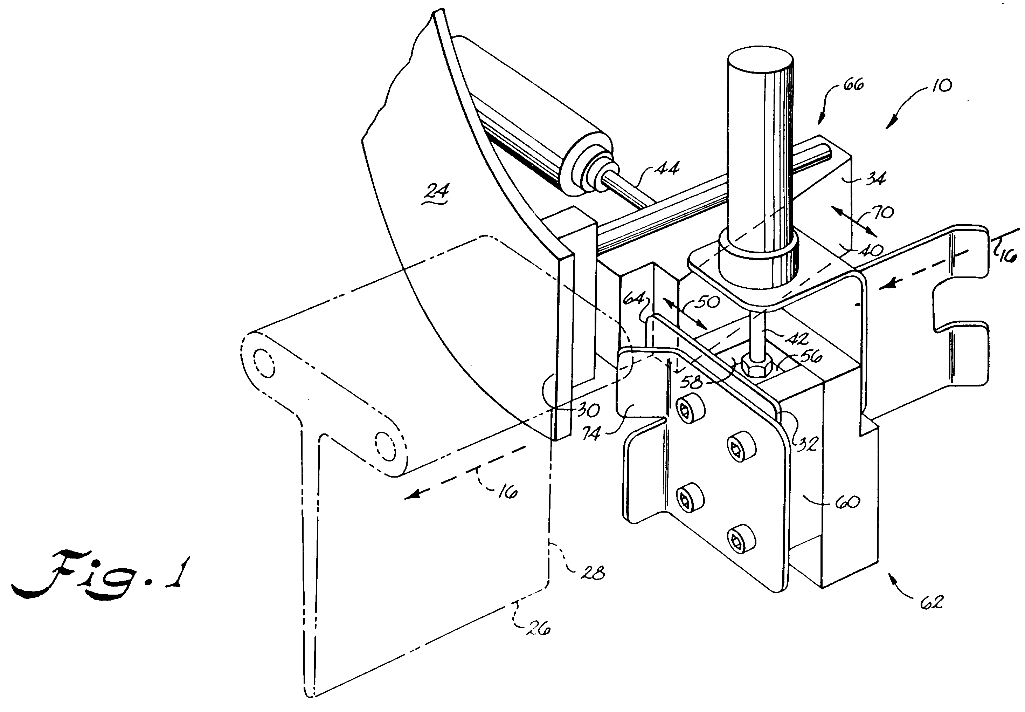

Those of ordinary skill in the art will appreciate that the following specific constructions are simply by way of example only, and are not intended as limiting the broader aspects of the present method and apparatus. Some of the present subject matter generally referred to hereinbelow is represented in the figures of Steeber, and discussed fully therein. For example, control means which may be practiced in accordance with this invention may assume various constructions, such as for example the control means discussed in conjunction with housing 38 of Figure 1 of Steeber. Just as in Steeber, this invention may be practiced with numerous different types and shapes of packages, though certain preferred embodiments are specifically adapted for use with aseptic paper package such as produced by TetraPak in a 250 milliliter size, or similar.

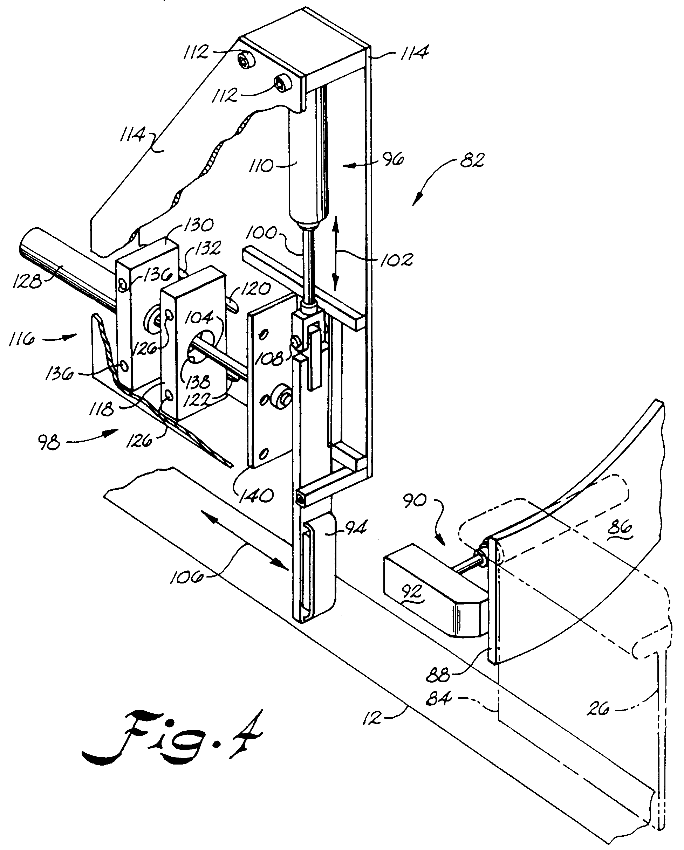

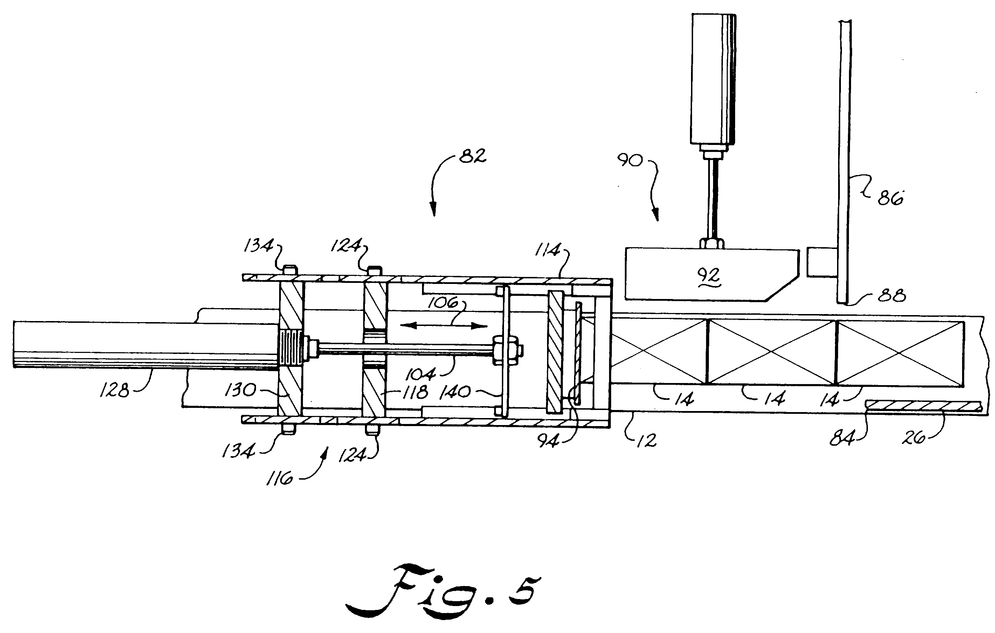

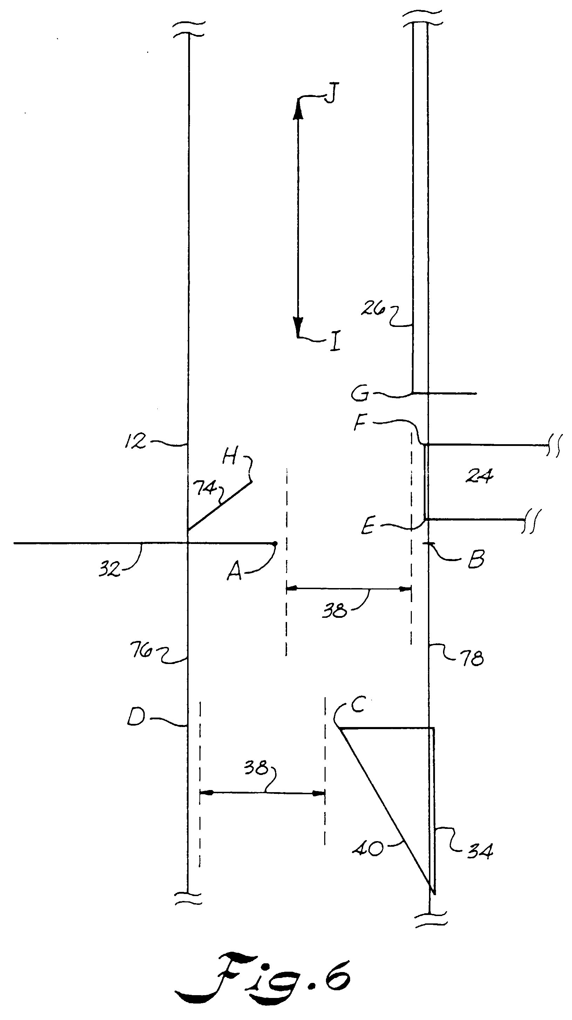

Figure 5 of Steeber illustrates in generally side elevational view (diagrammatical form) certain features of one accumulator apparatus 212 which may be used in accordance with this invention and association with conveyor belt means 210. Distal edges 222 of flights or veins used in the vertical conveyor portion of apparatus 212 have respective infeed end edge 224 and outfeed end edge 226. Upstream from infeed edge 224 are situated infeed brake means 232 (which may be a clamping pad or stop block similar to block 118 of Figures 3 and 4 of the '718 patent, though such specific block is in such patent actually an example of an outfeed stop block).

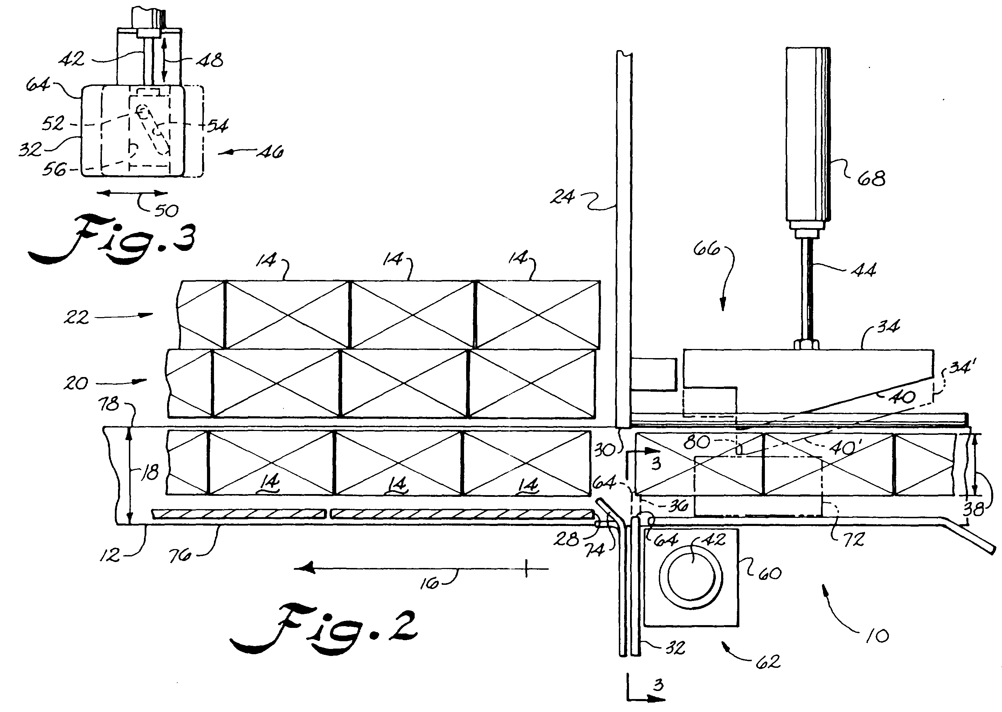

Figures 1 and 2 of the present application illustrate infeed pinchless product stop or trapping means or infeed product engagement apparatus which may be used relatively upstream from an accumulator means, such as in place of infeed brake means 232 of Figure 5 of Steeber.

Figure 5 of the '718 patent also illustrates locator means 242 situated relatively downstream from outfeed end edge 226. Such locator means 242 may comprise a retractable device with a controllable mechanism for relatively slightly shifting queued products in a downstream direction, such as the exemplary construction of Figure 6 of Steeber. In accordance with present features, such locator means 242 may be advantageously replaced with output shift means or outfeed product engagement apparatus as illustrated in present Figures 4 and 5.

Particulars of the foregoing present apparatus and features are set forth hereinbelow with reference to present application Figures 1 through 5.

Figures 1 and 2 illustrate an exemplary construction of infeed pinchless product stop means or trapping means generally 10 in accordance with this invention. Figure 1 is generally an isolated, perspective view of infeed stop means 10 while Figure 2 is a generally top plan view in somewhat diagrammatical form to illustrate the relationship of such features with a conveyor belt means 12 or the like, and products 14 carried thereon. The downstream direction of advancement for conveyor 12 is generally represented by arrow 16.

In general, operation of infeed pinchless product stop means 10 is such that the leading edge of a next approaching product is interrupted without interruption of the travel of any product whose leading edge has already passed by such infeed stop means. Such aspects of this invention will be discussed in greater detail below with reference to Figure 6. It will also be apparent from the remainder of the disclosure that operation of infeed stop means 10 results in selected product engagement as described above, but without application of any clamping force to such product or to any other products moving along conveyor 12.

While various embodiments and constructions may be practiced in accordance with such features of the invention, it is preferred that infeed product engagement apparatus 10 be provided for use along a conveyor such as 12 forming a pathway 18 (having a full width corresponding with the width of conveyor 12). Such conveyor moves in a defined downstream direction 16 between two workstations (such as the exemplary workstations 214 and 216 of Figure 5 of the '718 patent) and feeds products through an accumulator means (for example, apparatus 212 of such Figure 5 of the '718 patent) of the type which controllably removes a queue of products from the conveyor whenever there is a backup of products within such accumulator means.

Present Figure 2 partially represents successive product queues 20 and 22 which have been previously removed from conveyor 12. In such accumulator means, a guide member 24 (see present Figures 1 and 2) is provided relatively adjacent the outfeed and infeed edges of extending flights or vanes so as to prevent products from escaping or sliding out at such ends. Figure 1 represents an exemplary flight member 26 in dotted line while Figure 2 represents such in cross section. As understood by those of ordinary skill in the art, a plurality of such flights extend generally along the length of the accumulator means, and products are removed from the conveyor by being captured between adjacent rows of such flights. Alternatively, by reversing the rotational flow of the vertical mechanism, such flights may be used to return a row of previously removed products to the conveyor.

As the infeed edge 28 of the flight member 26 is swept passed guide member 24, any product which extends upstream from edge 28 to the point of contacting edge 30 of member 24 is subject to damage. In other words, such edge 30 of guide member 24 becomes a product shear point. Of course, upstream edge 28 of flight 26 may also be thought of as being a product shear point if a product extends along conveyor 12 so as to just barely engage or overlap such edge 28. In either event, the present invention is operative to ensure that products are positively advanced downstream from such edge 30 of guide member 24, and preferably much closer to edge 28 of flight 26, so as to positively eliminate product shear point damage during accumulator operations. While such positive advancement of an adequate downstream distance is being accomplished in accordance with this invention, additional products upstream from the accumulator are being stopped (in accordance with other features of this invention).

As represented in present Figures 1 and 2, the infeed product engagement apparatus or infeed stop or trapping means 10 preferably includes first and second members generally 32 and 34, respectively, and which are operative on opposite lateral sides of conveyor 12. First member 32 in this particular exemplary embodiment comprises a stop plate which is injected across a limited portion (represented by dotted line portion 36 of present Figure 2) of the conveyor 12 such that a space remains which is larger than the nominal width 38 of an advancing product 14. The length of such product 14 is the dimension thereof in the direction of arrow 16 and perpendicular to such width 38, while the height thereof is the third dimension above conveyor 12 and perpendicular to both the direction of arrow 16 and the width 38.

Second member 34 is relatively upstream from first member 32 (as illustrated in both present Figures 1 and 2) and in this exemplary construction comprises a deflector guide which is injected across a limited portion of the conveyor, likewise such that a space remains which is larger than the nominal product width 38. However, the injection of second member 34 causes products striking the deflector guide surface 40 thereof to move to a portion of the conveyor so that the leading edge of any such guided products subsequently engage the stop plate 32 (in the dotted line position 36 thereof).

Preferably, both members 32 and 34 are respectively piston actuated by their own associated pistons 42 and 44, or equivalents thereof. Such pistons may be pneumatically operated, or by other equivalent means, and preferably are commonly controlled so as to be simultaneously actuated.

As the exemplary sliding stop plate 32 is slidingly actuated, it forms part of interruption means in accordance with this invention for selectively interrupting product travel in at least a first part of the moving pathway 18 of the conveyor 12 situated relatively upstream from the accumulator means. In fact, the upstream side of plate 32 (in the dotted line position 36 thereof) establishes a trapping point in accordance with this invention.

The arrangement in present Figure 3 illustrates generally means 46 in accordance with this inventions for translating motion of piston 42 in the general vertical axis 48 to motion in the desired horizontal direction 50 for such plate 32. Specifically, plate 32 may carry a projecting pin 52 thereon, which pin is received in an angled or diagonal slot 54 formed in a moving block 56 which is mounted on the lower end of piston 42. By way of further example, it is illustrated that such block 56 may travel in a channel not shown as formed by further housing or block 60 associated with such interruption means generally 62 in accordance with this invention.

Figure 3 further represents sliding movement of plate 32 between one position thereof illustrated in solid line and in another alternate position thereof illustrated in dotted line. Of course, other drive mechanisms for such a plate, or other forms of stop members may be practiced. However, the perpendicular related drive arrangement of such Figures 1 through 3 for interruption means 62 advantageously limits the amount of space in or next to an accumulator which is required for achieving the illustrated function.

Also, as is discussed in greater detail hereinafter, the use of a plate-like member results in the provision of an interruption device which projects in the manner of a finger or similar structure resulting in minimal lateral contact to any product 14 whose leading edge has already passed the trapping point formed with such means. As will be further appreciated hereinafter, if the edge 64 of plate 32 strikes the lateral side of a product 14, such product will merely slide past the edge of plate 32 and continue along the moving pathway 18 of conveyor 12, without any clamping or pinching force applied thereto.

Guide means generally 66 are formed in association with guiding member 34 and its associated drive structure. Generally, such guide means are situated relatively upstream from the interruption means 62, and are operative for selectively guiding products 14 carried on the conveyor 12 into the pathway first part (i.e., that portion of the conveyor pathway which is interrupted by plate 32 when it is in its extended position 36). In such fashion, downstream movement in the direction of arrow 16 of such guided products is subsequently interrupted by contact with plate 32 in the dotted line position 36 thereof (see present Figure 2).

With further reference to such present Figure 2, it is well illustrated that piston 44 and its associated drive mechanism 68 are preferably arranged for alternate and controlled movement of guiding member 34 generally along the direction of horizontal arrow 70 (see Figure 1). The solid line illustration of present Figure 2 illustrates guiding member 34 in a relative retracted position thereof while the dotted line illustration 34' in present Figure 2 shows the fashion in which an exemplary product 72 may be moved towards a part of the conveyor by angled surface 40' so that subsequent downstream movement of such guided product 72 results in such product being trapped by and engaged against surface 36 of plate 32. Likewise, while a preferred wedge-shaped member 34 has been illustrated, those of ordinary skill in the art will appreciate that other flat or curved surfaces or other configurations of elements may be suitably used and controlled for selectively performing such guide means operation.

It will be further apparent from present Figures 1 and 2 that a fixed deflector means 74 may be provided mounted relatively downstream from the movable stop member 32 and extending into a portion of the conveyor pathway 18 which becomes uninterrupted whenever the movable stop member 32 assumes a defined first position thereof (i.e., the solid line position of member 32 as in present Figure 2). In such instance, fixed deflector means 74 would be operative for deflecting products away from the lateral edge 76 of the conveyor pathway to which the movable stop member 32 is adjacent (i.e., closer than the opposite lateral edge 78). As best illustrated in present Figure 2, an example of such a product would be product 72. In general, products tend to travel in relatively straight lines in the direction of arrow 16 once a lateral position of the product has been established on conveyor 12. If plate 32 became retracted after guide 34 had moved product 72 towards lateral edge 76, other fixed or movable features of the accumulator means, such as edge 28 of flight 26, could interfere with the travel of product 72 were it not for the function of fixed deflector means 74.

It should also be apparent from Figure 2 that an adequate distance remains between such lateral edge 76 and the further most extended edge 80 of such guide member 34 that product 72 does not become pinched nor clamped in any way by guide means 66. Hence, product 72 will with certainty continue to advance towards either plate 32 in position 36 thereof, or the fixed deflector means 74.

While the general features and component interactions of the subject invention are intended as being illustrated in the accompanying figures, it is not necessarily intended that all such illustration is to scale or with the same spacing as would exist in a given specific embodiment of the invention. However, it is intended to represent, particularly in conjunction with the subject discussion thereof, that the infeed product engagement apparatus 10 in effect traps a correct or appropriate product at the infeed of an accumulator means so that (in conjunction with an appropriate downstream shift as described hereinafter) an appropriate number of products as will safely fit into flights 26 or otherwise be accommodated therein will be removed from conveyor 12 without any shear point interference at edge 30 of guide 24 or at edge 28 of flight 26. It is also intended that the present figures illustrate and represent in general the features of the subject invention that apparatus lo provides a pinchless configuration, i.e., that such does not result in the application of any clamping or pinching force to products being trapped thereby or permitted to pass thereby or therethrough.

Turning now to additional features of the subject invention, present Figures 4 and 5 illustrate in perspective view (with partial cutaway) and sectional view, respectively, outfeed product engagement apparatus or output shift means generally 82 in accordance with the subject invention. As referenced above, locator means 242 of Figures 5 and 6 of Steeber are advantageously replaced in accordance with the subject invention by the structure of present Figures 4 and 5. In such present Figures 4 and 5, a conveyor 12 may again be associated with flights 26 of an accumulator means, which flights have a downstream edge 84 which is relatively just upstream from a guide member 86 which holds products into the downstream ends of such flights. Potential product shear points exist at edge 84 and at edge 88 of flight 86, in a similar fashion as was discussed about with reference to edges 28 and 30 of present Figures 1 and 2. While the method and apparatus of Steeber inherently avoided such shear points in many instances, the present invention is intended to affirmatively and positively avoid such shear points at the infeed end of the accumulator device in all instances.

The mechanism generally represented by reference character 90 in present Figures 4 and 5 basically comprises an outfeed brake means, which may be identical to the construction represented by outfeed brake means 234 in Figure 5 of Steeber, and as represented by actuator 114 and block member 118 of Figures 3 and 4 of Steeber. As will be understood by those of ordinary skill in the art, block 92 may be used in order to apply a controlled amount of clamping force to the products 14. Such outfeed brake means 90 may be used in the practice of methodology as in Steeber, wherein products are held from emerging beyond such outfeed brake means until previously released products or selected groupings of products have cleared a relatively downstream sensing point. Alternatively, the subject invention may be practiced with accumulators which do not operate in accordance with such specific features as those contained in the subject matter of Steeber.

Outfeed product engagement apparatus 82 of this embodiment includes a controllable product engagement member 94, engagement actuation means generally 96 and shift actuation means generally 98.

More specifically, the controllable product engagement member 94 may controllably assume first, second, and third positions thereof. The solid line illustration in present Figure 4 represents the defined first position (i.e., extending) of engagement member 94. The engagement actuation means 96, which may operate with a first piston 100 operative in a generally vertical axis 102 perpendicular to the conveyor pathway, selectively positions the product engagement member 94 between the first position thereof (as illustrated) relatively just downstream from the accumulator means and relatively adjacent the conveyor 12 so as to stop the movement of products 14 along the pathway thereof, and the second position thereof. The second selected position which may be effected by engagement actuation means 96 is accomplished by retracting or withdrawing piston 100 so as to displace member 94 (preferably upwardly) from the conveyor an adequate distance so as to not contact any products thereon.

Shift actuation means 98 is operative for selectively shifting the product engagement member 94 with products received thereagainst between the above-referenced first position thereof and a third position thereof (i.e., shifted) relatively adjacent the conveyor so as to stop the movement of products therealong and downstream from the first position by a total shift distance. Preferably such total shift distance is comprised of a predetermined minimum shift distance added to the nominal length of an individual product being moved on the conveyor. Such shift actuation means is preferably operable while feeding of products into the upstream end of the associated accumulator means is being controlled. Through such operations, products to be removed from the conveyor with the accumulator means may be controllably shifted relative thereto prior to such removal so as to prevent product shear points between the accumulator means and such products and between the accumulator means and products remaining on the conveyor.

Such shift actuation means 98 is preferably actuated with a second piston 104 for movement in a generally horizontal axis 106 parallel to the conveyor pathway, with such second piston when extended placing the product engagement member 94 in the first position thereof, and when retracted placing the product engagement member 94 in the third position thereof.

Also, the first and second pistons 100 and 104 may be (though are not required to be) simultaneously actuated for simultaneous movement of the product engagement member 94 along two axes. Such two axes movement particularly provides smooth action when the first piston is being retracted. The first piston 100 may also include at least one pivotable mounting such as 108 relative the product engagement member 94 so as to permit user-selected adjustment of the location of the first position relative an accumulator means downstream end, as discussed hereinafter. Alternative to the pivotable mounting 108, mounting of the opposite end of the drive actuator 110 for piston 100 may be pivotably mounted through a member (not shown) bolted with bolts 112 or the like at an upper portion of the housing 114. Such housing 114 may, if desired, be attached to or otherwise carried on an accumulator apparatus as illustrated with respect to housing 36 of Figure 1 of the Steeber patent.

The shift actuation means 98 may include shift adjustment means generally 116 for user-selected adjusting of the total shift distance. For example, such shift adjustment means may include an adjustable stop member 118, the user-selected position of which establishes the third position of the product engagement member 94, so that a user may selectively adjust the total shift distance. In other words, a top slct 120 and bottom slot 122 may be provided in each lateral side of housing 114 for cooperation with corresponding bolts or the like 124 in corresponding bolt holes 126 of such stop member 118. Not all of such slots are illustrated in Figure 4 since housing 114 is shown in partial cutaway. By selective loosening and tightening of such bolts or the like, the position of block 118 may be adjusted along the direction of axis 106. By providing a stop member for retraction of piston 104 during operation of an actuator 128, the third position (i.e., shifted position of product engagement member 94 may be selectively and readily adjusted.

As an additional feature of this embodiment, first position adjustment means are provided for user-selected adjusting of the position of the controllable piston actuator 128, so that a user may selectively adjust the product engagement member first position. For such function, an additional mounting block 130 having a fixed relationship with piston actuator 128 may be outfitted with a similar adjustement arrangement as used in connection with block 118. In other words, either in the same slot 120 or a separately formed slot 132 and other corresponding slots, bolts 134 may cooperate with corresponding threaded holes or openings 136 on each lateral side of block 130 so that the position of such block may be adjusted relative housing 114. As illustrated by the remaining connections, the first position of member 94 may thereby be adjusted, in which case the generally vertical axis 102 of piston 100 will become slightly tilted to accomodate such adjustements. Drive connection (for clarity, not shown in its entirety but well understood to those of ordinary skill in the art) should be effected between piston 104 and engagement member 94. Similarly, an exemplary opening 138 is defined in block 118 for the passage of such piston 104 therethrough, block 118 forming a stop member against which the travel of an end member 140 is interrupted.

While the foregoing discussion of Figures 1 through 5 discloses in detail present apparatus as it may be separately provided with respect to each other, and as in combination with an exemplary accumulator apparatus as in the '718 patent, or other forms of apparatus for accumulator operations, the following description is more specifically related to the present methodology. Such methodology may also be practiced in combination with the subject matter disclosed in Steeber, or otherwise with different accumulators.

Referring now to Figure 6, additional details of present methodology will be explained. In particular, Figure 6 is intended to represent in diagrammatical form only a top view of an infeed section relative an accumulator, in accordance with the present features. The relative motion and detailed construction of the various indicated members are discussed in greater detail above with reference to Figures 1 through 3. Accordingly, such construction details are omitted in Figure 6 for greater clarity. However, corresponding reference characters as in such Figures 1 through 3 are used for convenience in relating such subject matter to present Figure 6.

In Figure 6, engagement member plate 32 and guide member wedge 34 are represented in their actuated positions respectively. In other words, the leading edge A of plate 32 is extended so as to establish an infeed trapping point thereat, and situated along the conveyor 12 a predetermined distance upstream from the accumulator device infeed, which infeed generally may be regarded as comprising that portion of the apparatus downstream from the infeed guide (i.e., downstream from infeed guide 24 point F). The distance between point A and the lateral side 76 of conveyor 12 constitutes the first part of the conveyor pathway. Point C on guide member 34 is similarly displaced from its associated lateral edge 78 of conveyor 12. In each instance of members 32 and 34, the remaining width of the conveyor pathway is greater than the nominal width 38 of products being carried on conveyor 12. In other words, the distance from points A to B and the distance from points C to D is respectively greater than the nominal width 38. It should be apparent to those of ordinary skill in the art that point D is the point on lateral side 76 of conveyor 12 which is directly opposite the furthermost extended point C of member 34, while point B is the point on lateral side 78 of conveyor 12 which is directly opposite the furthermost extended point A of member 32.

Dimensionally, stop member 32 projects beyond lateral side 76 so that point A is approximately 0.95 or 1.27 cm (3/8 or 1/2 of an inch) (preferably) beyond lateral side 76. The projecting distance of point A is adequate so that the inclined surface or wedge 40 of member 34 causes a package to be deflected into and trapped at a position adjacent to point A. As such trap is established (i.e, such trapping means actuated), the outfeed apparatus in accordance with this invention is operative to shift the queued products relatively downstream by an adequate or predetermined distance, which is diagrammatically represented by the line from point I to point J on present Figure 6. In general, such distance is intended to be at least as great as the nominal length of an individual product carried on conveyor 12. More preferably, the shift distance comprises approximately 150 percent or 160 percent of such nominal product length, though a broader range such as from generally about 1.3 times to about 1.7 times the length of the nominal product length may also be practiced.

Another manner in which such adequate downstream shift distance may be determined in accordance with features of this invention is by adding the equivalent of the nominal length of an individual product being advanced along conveyor 12 to the distance along conveyor 12 between points A and G. Such distance in one preferred embodiment may be about 4 centimeters, though a range of distances may be practiced in accordance with this invention, such as including from about 3 centimeters to about 10 centimeters. It is also preferred that the shift adjustment means described above should be operated by a user to accommodate changes in nominal product length being used in a given arrangement, or to accommodate the specific distance in the conveyor direction from point A to point G of Figure 6. The critical dimension is for the adequate distance to comprise the nominal length of one product plus at least the distance in the conveyor direction from point A to point F of Figure 6, so that in accordance with this invention the interference point F will be avoided.

Subsequent to such relative downstream shifting, a reverse shift operation may be performed in accordance with the method and apparatus disclosed in the '718 patent. Additional details of such features are set forth in such patent, fully incorporated by reference.

Returning once again to Figure 6, it may be noted by way of summary that the distances between points C and D, between points A and B, and between points A and C are all intended as being greater than the nominal width 38 of each individual product 14 advanced along conveyor 12. In such fashion, the apparatus 10 in accordance with this invention prevents the occurrence of any pinch points, i.e., accomplishes the desired trapping operations without applying any clamping force to any products. Similarly, situation of the downstream deflector means 74 for operation whenever plate 32 is retracted makes certain that any subsequent product travel is adequately removed from lateral side 76 so as to avoid interference with any other members of the accumulator which may be adjacent to such lateral edge.

By operating the subject apparatus in accordance with this embodiment, the downstream shift amount preferably of approximately 150 to 160 percent of the nominal length of a product in combination with trapping an appropriate product (i.e., the next adjacent product whose leading edge has not yet reached point A), the maximum safe amount of products may be removed with operation of an accumulator (rather than a specific fixed number of such products) without the occurrence of any product shear points damage. In other words, the subject invention automatically compensates for any and all variations in package size, without requiring excessively complex apparatus or methodology for operation. Even if products become tipped, the transfer represented by the distance between points I and J (not intended as being to scale) is adequate to eliminate the potential for interference at point F of Figure 6. While in some instances of practicing the present invention products will be advanced completely inside the flights (i.e., beyond point G of Figure 6) it is acceptable in general for a portion of the product to extend upstream from point G so long as there is no interference at point F.

Those of ordinary skill in the art will likewise appreciate that such methodology of the subject invention may be operated with a variety of components and devices, not limited to the exemplary embodiments thereof as illustrated herewith. It will also be appreciated that the complete adjustability and variation of the outfeed apparatus generally 82 as represented in present Figures 4 and 5 permit the user to arrange and establish the present method and apparatus for operation with a variety of products. For example, the aseptic paper packages discussed above may come in variety of sizes, for example having lengths from about 3.81 to 7.62 cm (1 1/2 inches to about 3 inches). Other products and other sizes thereof may also be used during practice of the subject invention.

Those of ordinary skill in the art will also appreciate that the present invention is operative with all such devices as disclosed herewith or equivalents thereof, or others, which provide for an adequate downstream shift operation in conjunction with the above-described trapping function. With such trapping function, the product whose leading edge has not yet reached point A is permitted to pass by such point so as to also advanced adequately downstream to avoid interference at point F. In a worse case scenario, a product leading edge will just miss point A (i.e., be just downstream therefrom whenever a product removal sequence is initiated). Even in such circumstance, in accordance with this invention such product is advanced one full product length thereof and an additional amount, preferably the conveyor direction distance from points A to point F (and more preferably from point A to point G), so that even in such worse case scenario such product avoids interference with point F of Figure 6. Utilization of a positive clamping action would not permit the same advantageous results in all situations.

It should be further understood to those of ordinary skill in the art that additional features of accumulator devices, such as those described in the '718 patent, may be practiced in combination with all of the foregoing present features. For example, an accumulator device may include a movable transfer plate such as disclosed in the '718 patent, and may include product return operations as discussed in such patent.

It should be further understood by those of ordinary skill in the art that the foregoing presently preferred embodiments (both method and apparatus) are exemplary only, and that the attendant description thereof is likewise by way of words of example rather than words of limitation and their use do not preclude inclusion of such modifications, variations, and/or additions to the present invention which would be readily apparent to one of ordinary skill in the art, the scope of the present invention being set forth in the appended claims.

## Claims

1. A method of surge control for products (14) being transported via a moving conveyor belt means (12) in a predetermined downstream direction (16) between two production areas, said method comprising:
providing an accumulator means with an upstream infeed and a downstream outfeed, and situated alongside the conveyor belt means (12) intermediate the two production areas so that one of such areas is upstream of the accumulator means infeed and the other production area is downstream of such device outfeed, such accumulator means being capable of controllably removing products (14) from the conveyor belt means (12) if there is a backup of products (14) being fed to the downstream production area; and
controllably removing products (12) from the conveyor belt means (12) with the accumulator means if a queue of products develops within the accumulator means between the outfeed and infeed thereof; wherein said removing step includes establishing an infeed trapping point (A) being situated along the conveyor belt means (12) a predetermined distance upstream from the accumulator means infeed, and and effecting a subsequent relative downstream shift of the of queue products the method being characterized by:
the infeed trapping point (A) being by way of engaging the leading edge of any product (14) transported thereagainst by the conveyor belt means (12) and
relatively shifting the queue of products (14) a distance downstream such that all products (14) downstream of the infeed trapping point (A) and not engaged thereat are transported downstream at least to the accumulator means infeed, so that products (14) can be removed undamaged from the conveyor belt means (12) by the accumulator means regardless of the relative position of products (14) at the accumulator means infeed whenever the removing step commences, wherein said distance is selected to be at least as great as the nominal length of the individual products (14) being transported via the conveyor belt means (12).

2. A method as claimed in claim 1, wherein said distance generally falls in a range from about 3 centimetres to about 10 centimetres.

3. A method as in claim 1, wherein said distance is selected to be generally about the nominal product length added to said predetermined distance.

4. A method as in claim 3, wherein said distance is user-selected, and falls generally in a range from about 1.3 times to about 1.7 times the nominal product length.

5. A method as in claim 1, wherein:
said engaging step includes injecting an engagement member (32) partially into the product path such that adequate width remains for products (14) to pass by said engagement member (32) if the leading edge of such product (14) has already passed thereby, and upstream therefrom guiding products relatively upstream on the conveyor belt means (12) towards such engagement member (32) so as to be engaged thereby;
said predetermined distance is generally no greater than about 1.7 times the nominal length of products (14) being transported via the conveyor belt means (12); and
said adequate distance is user-selected, and falls generally in a range from about 1.3 times to about 1.7 times the nominal product length, so that products are shifted generally about one nominal product length and about such predetermined distance.

6. A method as in claim 5, wherein:
said accumulator means includes a generally vertical conveyor mechanism with a plurality of spaced, outwardly extending flights (26) thereon for the accumulation of products between adjacent such flights (26);
said removing step includes indexing such vertical conveyor mechanism so as to remove products (14) from the conveyor belt means (12); and
said method further includes the step of selectively returning products (14) to the conveyor belt means (12) which were previously removed therefrom with the accumulator device, whenever no products (14) are within such accumulator device on the conveyor belt means (12).

7. A method as in claim 6, wherein:
said method further includes the step of selectively holding back all products (14) emerging from the downstream end of the accumulator means during normal running operations so as to maintain a predetermined distance gap between each predetermined number of products (14) moving towards the downstream production area from the accumulator means downstream end, by ensuring the presence of said predetermined distance gap before the release of a subsequent said predetermined number of products (14); and
wherein said removing step includes removing products (14) if the queue of products (14) develops within the accumulator device before the predetermined distance gap occurs between products (14) emerging from the accumulator device downstream end.

8. A method as in claim 6, further including the step of providing the accumulator means with a movable transfer plate operatively situated relative the conveyor belt means (12) and the distal ends of the accumulator device outwardly extending flights (26), and including the step of controlling the position of such movable transfer plate during product (14) removing and returning operations so as to prevent the occurrence of lateral shear points for the products (14) as they are moved in alternate directions.

9. A method of surge control of claim 1, including preventing all products (14) from leaving the accumulator means outfeed side; and
initiating a product removal sequence if the preventing step results in a queue of products (14) extending through the accumulator means from the outfeed side thereof back to the infeed side thereof;
the preventing step being conducted during normal running operations until predetermined numbers of products (14) previously released therefrom have passed a sensing point along the conveyor (12) a predetermined distance downstream toward the second workstation from the accumulator means, so as to maintain a predetermined distance gap between predetermined numbers of products (14) emerging from the accumulator means outfeed side and such product removal sequence includes setting a trap at the trapping point (A) for the leading edge of the next product approaching the trapping point from the direction of the first workstation; relatively shifting the products (14) within the accumulator means queue a distance downstream such that products (14) any portion of which are downstream from the trapping point (A) are shifted beyond the accumulator means infeed side shear point while products upstream from the trapping point (A) become trapped thereat; and thereafter operating the accumulator means for removing products (14) from the conveyor (12) within the accumulator means, so that such products (14) are isolated from line pressure along the conveyor (12) and positively directed past potential product shear points regardless of their initial position, so as to prevent shear point damage thereto during their removal, and wherein said distance is selected to be at least as great as the nominal length of the individual products (14) being transported via the conveyor belt means (12).

10. A method as in claim 9, wherein setting said trap includes injecting a stop member (32) acroos part of the conveyor (12), with the remaining width of the conveyor being greater than the nominal width (38) of individual products (14) advancing along the conveyor (12), such that products (14) laterally struck by such stop member (32) continue thereby while a product (14) whose leading edge strikes such stop member (32) is trapped thereby.

11. A method as in claim 10, wherein setting said trap includes injecting a guide member (40) across part of the conveyor (12) relatively upstream from the stop member (32) so as to guide products (14) upstream therefrom into subsequent leading edge engagement with such stop member (32) so as to be trapped thereby.

12. A method as in claim 11, wherein said distance downstream is generally in a range from about 1.3 times to about 1.7 times the nominal product length.

13. A method as in claim 10, wherein setting said trap includes deflecting products (14), just downstream from said stop member (32), away from a lateral edge (76) of the conveyor (12) closer to said stop member (32), to compensate for operation of said guide member (34) on nontrapped products.

14. A method as in claim 10, wherein:
the accumulator means includes a generally vertical escalator-type device having a travelling belt with a plurality of outwardly extending members therecn forming flights (26), between which groups of products (14) may be located and accumulated off-line of the conveyor (12);
said accumulator means further includes outfeed brake means (82) for selectively stopping the flow of products (14) at the outfeed side of the accumulator means; and
wherein said method further includes returning to the conveyor products (14) previously removed therefrom whenever there are no products (14) between the infeed and outfeed sides of the accumulator means.

15. A method as in claim 10, wherein the products comprise aseptic paper containers, the first workstation comprises a filler machine, and the second workstation comprises one of a straw-applicator and a packing machine, and wherein the preventing step includes releasing products (14) in groups of a predetermined number.

16. A method of surge control of claim 1 or 9, including controllably removing products (14) from the conveyor belt means (12) with the accumulator means if a queue of products (14) develops within the accumulator means before products (14) emerging from the accumulator means can advance towards the downstream production area; wherein
said accumulator means includes a generally vertical conveyor mechanism with a plurality of spaced, outwardly extending flights (26) thereon for the accumulation of products (14) between adjacent such flights (26), said removing step includes indexing such vertical conveyor mechanism so as to remove from the conveyor belt means (12) a line of products (14) queued within the accumulator means to form a slug of products (14) extending generally along the length of the vertical conveyor mechanism; and wherein
said accumulator means further includes an outfeed shift mechanism (82), relatively just downstream from the downstream edges of the plurality of outwardly extending flights (26), and with operation of which products (14) to be removed with the accumulator means are permitted to shift relatively downstream a preselected total distance during the removing step prior to indexing of the vertical conveyor mechanism, while the flow of other products (14) approaching the accumulator means is stopped, such preselected total distance comprising the length of one product (14) carried on the conveyor belt means (12) added to a predetermined fixed distance, so that product shear points are positively prevented at the downstream and upstream edges of the flights (26) during the removing step regardless of initial product positions along the conveyor belt means (12).

17. A method as in claim 16, further including: selectively holding back products (14) emerging from the downstream end of the accumulator means so as to maintain a predetermined distance gap between adjacent products (14) or predetermined groups of products (14) moving towards the downstream production area; and wherein
said removing step includes removing products (14) from the conveyor belt means (12) if the queue of products (14) develops within the accumulator means before the predetermined distance gap occurs between products (14) or said predetermined groups of products (14) emerging from the accumulator means; and wherein
said method further includes retaining at least one product immediately adjacent said outfeed shift mechanism (82) during the removing step, and thereafter moving such retained products (14) relatively upstream so as to reestablish the predetermined distance gap to be maintained, which gap is otherwise diminished whenever products are initially permitted to shift relatively downstream against said outfeed shift mechanism (82).

18. A method as in claim 16, further including infeed trapping means (66), located upstream from the accumulator means by generally about said predetermined fixed distance, for stopping the next product (14) situated upstream therefrom and whose leading edge has not yet reached such infeed trapping means (66), so that said infeed trapping means (66) is operative to stop such product (14) without the application of any clamping force thereto or to any other products (14) transported via the conveyor belt means (12).

19. A method as claimed in claim 9, wherein said trap setting step is conducted by pinchless entrapment of a product leading edge approaching a selected trapping point (A) upstream from said accumulator means;
wherein the accumulator means includes a generally vertical escalator-type device having a travelling belt with a plurality of outwardly extending members (26) thereon forming flights, between which groups of products (14) may be located and accumulated off-line of the conveyor (12), and wherein said accumulator means further includes infeed pinchless product stop means (32) and outfeed brake means (90), for selectively interrupting the flow of products at the infeed and outfeed sides, respectively, of the apparatus; and
wherein the shifting step includes situating an adjustable outfeed shift member (94) in the flow path of products (14) along the conveyor (12) at a selected point relatively just downstream from the outfeed brake means (90), and thereafter releasing the outfeed brake means (90) to permit the queue of products extending through the accumulator means to shift downward into engagement with such outfeed shift member (94) in a downstream shifted position thereof, such that such products (14) are shifted downstream by said preselected total distance which corresponds with the length of one of such products (14) added to a predetermined fixed distance, so that products (14) upstream thereof may be cleanly removed from the conveyor (12) without shear point damage to the product (14).

20. A method as in claim 19, wherein:
said infeed pinchless product stop means (32) is located upstream from the accumulator means by about said predetermined fixed distance, and operates to interrupt the next approaching product (14) leading edge without interrupting the travel of any product (14) whose leading edge has already passed by such infeed stop means (32);
the nominal length of individual products being advanced along the conveyor (12) at a given time falls generally within a range of from about 3.81 to 7.62 cm (1 1/2 inches to about 3 inches); and
the downstream shifting distance of the outfeed shift member (94) is adjusted to accommodate the nominal product length.

21. A method as in claim 20, wherein subsequent to removal of products (14) from the conveyor (12), at least one product (14) shifted downstream beyond the accumulator means is relocated upstream with reverse operation of the outfeed shift member (94) and thereafter reclamped with the outfeed brake means (92), further whereafter the outfeed shift member (94) is removed from the product flow path along the conveyor (12) until a subsequent product removal sequence is initiated, so that such upstream relocating and reclamping steps permit a subsequent downstream shifting step to be performed for subsequent product removal sequences.

22. An accumulator means for a product handling apparatus arranged to carry out the method of claim 9 in respect of a product of a predetermined nominal length, the device being generally of the type having a vertically-oriented conveyor with a plurality of spaced, outwardly extending flights (26) for accumulating products (14) therebetween, with indexing of such conveyor (12) in selected directions resulting alternatively in removal or return of products (14) relative a carrying surface of a production line with which such accumulator is associated in such fashion that given of the extending flights (26) may be situated in a null position for the passage of products (14) therethrough carried on the production line with such flights (26) acting as guide rails and outfeed shift means (82) relatively adjacent the output of the accumulator means and operative for selectively shifting products (14) a selected downstream distance and infeed product trapping means (32) relatively adjacent the input of the accumulator means a selected upstream distance therefrom characterized by: the infeed trapping means (32) being operative for selectively capturing without use of clamping force the leading edge of the next product (14) having its leading edge upstream therefrom, said selected downstream distance is at least as great as the nominal length of one of the production line products so that cooperative actuation of said outfeed shift means (82) and said infeed product trapping means prevent the occurrence of product shear points adjacent input edges of the conveyor flights (26).

23. A means as in claim 22 in which the distance is equal to the nominal length of the production line products added to a selected upstream distance.

24. A means as in claim 23 wherein said selected upstream distance falls generally in a range of from about 30 percent to about 70 percent of the nominal production line product length.

25. A means as in claim 24, wherein the shift distance of said shift means is adjustable so as to accommodate accumulator means use with different length products and a selected upstream distance.

26. A means as in one of claims 22 to 25, wherein said outfeed shift means may be selectively extended into and withdrawn from a product engaging position relative the production line carrying surface (12), and wherein said outfeed shift means (82) includes a selective shift control piston actuator (98) the extended and retracted positions of which are both adjustable, so that said selected downstream distance and location thereof relative the production line may both be adjusted.

27. A means as in one of claims 22 to 25, wherein said infeed product trapping means (32) includes a pair of first and second members operative on opposite lateral sides of the production line, wherein said first member comprises a stop plate (32) which is injected across a limited portion of the production line carrying surface (12) such that a space remains which is larger than the nominal width (38) of a production line product (14), and wherein said second member is relatively upstream from said first member and comprises a deflector guide (34) which is injected across a limited portion of the production line carrying surface (12) such that a space remains which is larger than the nominal product width, but which second member injection causes products (14) striking such deflector guide (34) to move to a portion of the production line carrying surface (12) which results in the leading edge of any such products (14) subsequently engaging said stop plate (32).

28. A means as in claim 27, wherein said stop plate (32) and said deflector guide (34) are respectively injected by piston actuators which are commonly controlled.

29. Product handling apparatus for controlling the flow of products (14) advancing along a conveyor (12) from a first workstation to a second workstation, in accordance with the method of claim 9, said apparatus including:
an accumulator means as claimed in claim 22 adjacent the conveyor (12) between the first and second workstations, for controllably alternately removing and returning products (14) relative the conveyor (12), said accumulator means having respective infeed and outfeed sides generally between which products (14) may be alternately removed from and returned to the conveyor (12);
pinchless infeed product trapping means (10), associated with said accumulator means infeed side, for being controllably actuable for stopping without applying clamping force the entry of products (14) along the conveyor (12) into said accumulator means infeed side, which products (14) still have their leading edges upstream from said trapping means (10);
outfeed brake means (90), associated with said accumulator means outfeed side, for being controllably actuated for stopping products (14) along the conveyor from emerging from said accumulator means outfeed side;
downstream sensor means, situated alongside the conveyor (12) a predetermined distance downstream from said accumulator means outfeed side, for detecting the passage of products (14) thereby;
outfeed shift means (82), controllably actuable for selectively moving into and out of the path of products (14) along the conveyor (12) downstream from said outfeed brake means (90) and upstream from said downstream sensor means, said outfeed shift means (82) being also controllably actuable for shifting relatively downstream products (14) along the conveyor (12) an adjustable, user-selected distance greater than at least the length of one of the products (14) advancing along the conveyor (12); and
control means operatively associated with said accumulator means, pinchless infeed product trapping means (32), outfeed brake means (90), downstream sensor means, and outfeed shift means (82), respectively, for temporarily accumulating products (14) off-line of the conveyor (12) whenever excessive numbers of products (14) queue up between the first and second workstations;
wherein said control means operates in a normal run mode to alternately actuate and deactuate said outfeed brake means (90) for preventing products (14) from leaving said accumulator means outfeed side until a predetermined number of previously released products have passed said sensor means, and wherein said control means operates in a product removal mode whenever actuation of said outfeed brake means (90) in the normal run mode results in a queue of products (14) extending through the accumulator means from said outfeed side thereof back to said infeed side thereof;
and wherein such product removal mode includes actuating said pinchless infeed product trapping means (10) to stop the leading edge of the next adjacent upstream product (14) on the conveyor (12) from entering said accumulator means infeed side, deactuating said outfeed brake means (90) and actuating said outfeed shift means (82) so as to permit relative shifting of products (14) on the conveyor (12) within said accumulator means downstream by said adjustable, user-selected distance, and controlling said accumulator means for removing such products (14) from the conveyor (12), so that product shear points are positively eliminated during product removal regardless of the initial position of products (14) relative the accumulator means infeed side or the number of products (14) being removed during a given product removal sequence.

30. A product handling apparatus as in claim 29, wherein:
said control means functions during the absence of any products (14) on the conveyor (12) within said accumulator means so as to return products (14) to such conveyor (12) which were previously removed therefrom by said accumulator means;
said accumulator means includes fixed guide members (24,86) generally perpendicular to the advancing direction (16) of the conveyor (12) and separated by a predetermined distance from respective infeed and outfeed edges of said vertical conveyor mechanism outwardly extending flights (26), so as to prevent escape of products (14) from such flights (46) at the infeed and outfeed edges thereof;
said pinchless infeed product trapping means (32) is situated a predetermined distance upstream from the infeed edges of said vertical conveyor mechanism outwardly extending flights (26); and
said downstream shifting distance is equal to generally about the nominal length of individual products advancing along the conveyor (12) added to said predetermined distance, such that products (14) to be accumulated are positively advanced at least downstream beyond the fixed guide member (24) on the infeed side of the accumulator means so as to prevent the occurrence of any product shear points between such guide members and products being accumulated, and, optionally, products (12) advancing along the conveyor comprise paper-based packages having a nominal length of about 3.81 to 7.62 cm (1 1/2 inches to about 3 inches) and being filled with liquid materials, the first workstation comprises a filler machine, the second workstation comprises either of a straw-applicator or packing machine, and said predetermined number of previously released products is 3.

31. Product handling apparatus as in claim 30, wherein said outfeed shift means (82) comprises: a controllable product engagement member (94);
engagement actuation means (96) for selectively positioning said product engagement member (94) between a first position thereof relatively just downstream from the accumulator means and relatively adjacent the conveyor (12) so as to stop the advancement of products (14) therealong, and a second position thereof adequately displaced from the conveyor (12) so as to not contact products (14) thereon; and
shift actuation means (98) for selectively shifting said product engagement member (94) with products received thereagainst between said first position thereof, and a third position thereof relatively adjacent the conveyor (12) so as to stop the advancement of products (14) therealong and downstream from said first position by a total shift distance comprised of a predetermined minimum shift distance added to the nominal length of a product (14) being moved on the conveyor (12).

32. Product handling apparatus as in claim 30, wherein said pinchless input product trapping means (10) includes a pair of first and second members (32, 34) operative on opposite lateral sides of the conveyor (12), wherein said first member comprises a stop plate (32) which is injected across a limited portion of the conveyor (12) such that a space remains which is larger than the nominal width (38) of an advancing product (14), and wherein said second member (34) is relatively upstream from said first member (32) and comprises a deflector guide (34) which is injected across a limited portion of the conveyor (12) such that a space remains which is larger than the nominal product width (38), but which second member (34) injection causes products (14) striking such deflector guide (34) to move to a portion of the conveyor (12) which results in the leading edge of any such products subsequently engaging said stop plate (32).

33. A means or a product handling apparatus of any one of claims 22 to 32 including an infeed product engagement apparatus comprising:
interruption means (32) for selectively interrupting product travel in at least a first part of the moving pathway of the conveyor (12) situated relatively upstream from the accumulator means; and
guide means (34), situated relatively upstream from said interruption means (32), for selectively guiding products carried on the conveyor (12) into the pathway first part, so that downstream movement of such guided products (14) is subsequently interrupted by said interruption means (32).

34. A means or a product handling apparatus of claim 33 wherein said interruption means (32) comprises a movable stop member (32) for controlled movement between a first position laterally adjacent the conveyor pathway and a second position extending across part of the conveyor pathway comprising said first part thereof, so that the remaining noninterrupted portion of the conveyor pathway has a width greater than the nominal width (38) of products (14) feeding along the conveyor (12).

35. A means or a product handling apparatus as in claim 33 or 34, wherein said movable stop member (32) comprises a piston actuated sliding plate (32) extending substantially perpendicular to the conveyor pathway, and for example the piston (68) for said sliding plate (32) is oriented at generally about a right angle to the line of movement (16) of said plate (32) and is associated with means for translating motion of such piston (16) into motion of such plate along its line of movement.

36. A means or a product handling apparatus as in claim 33 or 34, further including fixed deflector means (74), mounted relatively downstream from said movable stop member (32) and extending into a portion of the conveyor pathway which becomes uninterrupted whenever said movable stop member (32) assumes said first position thereof, for deflecting products (14) away from the lateral edge (76) of the conveyor pathway to which said movable stop member (32) is adjacent.

37. A means or a product handling apparatus as in claim 33 or 34, wherein said guide means (10) comprises a movable product guiding member (34) for controlled movement between a first position laterally adjacent the conveyor pathway on the opposite side thereof from said movable stop member (32) and a second position extending across part of the conveyor pathway so that products (14) thereon are guided towards said pathway first part, and for example said movable product guiding member comprises a piston actuated wedge shaped member (34), the actuation of which is coordinated with actuation of said movable stop member (32).

38. A means or a product handling apparatus as claimed in any one of claims 22 to 36 including an outfeed product engagement apparatus comprising:
a controllable product engagement member (94);
engagement actuation means (96) for selectively positioning said product engagement member (94) between a first position thereof relatively just downstream from the accumulator means and relatively adjacent the conveyor (12) so as to stop the movement of products (14) along the pathway thereof, and a second position thereof adequately displaced from the conveyor (12) so as to not contact products (14) thereon; and including
shift actuation means (98) for selectively shifting said product engagement member (94) with products received thereagainst between said first position thereof, and a third position thereof relatively adjacent the conveyor (12) so as to stop the movement of products (14) therealong and downstream from said first position by a total shift distance comprised of a predetermined minimum shift distance added to the length of a product (14) being moved on the conveyor (12), while feeding of products (14) into the upstream end of the accumulator means is controlled, so that products (14) to be removed from the conveyor (12) with the accumulator means may be controllably shifted relative thereto prior to such removal so as to prevent product shear points between the accumulator means and such products (14) and between the accumulator means and products (14) remaining on the conveyor (12).

39. A means or a product handling apparatus as in claim 38, wherein said shift actuation means (98) includes shift adjustment means for user-selected adjusting of said total shift distance.

40. A means or a product handling apparatus as in claim 39 in which said shift actuation means (98) includes a controllable piston actuator for controllably moving said product engagement member, and said shift adjustment means (98) includes an adjustable stop member (118), the user-selected position of which establishes said third position of said product engagement member (94), so that a user may selectively adjust said total shift distance, the apparatus optionally further including first position adjustment means (130) for user-selected adjusting of the position of said controllable piston actuator, so that a user may selectively adjust said product engagement member (94) first position.

41. A means or a product handling apparatus as in claim 38, wherein:
said engagement actuation means (96) is piston actuated by a first piston (110) having a generally vertical axis perpendicular to the conveyor pathway, such first piston (110) when extended placing said product engagement member (94) in said first position thereof, and when retracted placing said product engagement member (94) in said second position thereof; and
said shift actuation means (98) is piston actuated by a second piston (128) having a generally horizontal axis parallel to the conveyor pathway, such second piston (128) when extended placing said product engagement member (94) in said first position thereof, and when retracted placing said product engagement member (94) in said third position thereof, and optionally:
said first and second pistons (110, 128) may be simultaneously actuated for simultaneous movement of said product engagement member (94) along two axes; and
said first piston (110) includes at least one pivotable mounting relative said product engagement member (94) so as to permit user-selected adjustment of the location of said first position relative an accumulator means downstream end.

42. A method as in claim 1, wherein said engaging step includes partially restricting the product path on the conveyor belt means (12) without applying any clamping force to the products (14), and injecting an engagement member (32) partially into the product path such that adequate width remains for products (14) to pass by said engagement member (32) if the leading edge of such products (14) has already passed thereby, while upstream from said engagement member (32) guiding products (14) relatively upstream on the conveyor belt means towards such engagement member (32) so as to be engaged thereby.

## Patentansprüche

1. Ein Verfahren zur Überlagungssteuerung für Produkte (14), die mittels einer sich bewegenden Förderbandvorrichtung (12) zwischen zwei Produktionsflächen in einer vorbestimmten, stromabwärtigen Richtung (16) transportiert werden, wobei besagtes Verfahren umfaßt:
Bereitstellen einer längsseits der Förderbandvorrichtung (12) und zwischen den zwei Produktionsflächen angeordneten Speichervorrichtung mit einem stromaufwärtigen Einlaß und einem stromabwärtigen Auslaß, so daß eine dieser Flächen stromaufwärts zum Einlaß der Speichervorrichtung und die andere Produktionsfläche stromabwärts zum Auslaß der Vorrichtung gelegen ist, wobei eine solche Speicheremrichtung in der Lage ist, von der Förderbandvorrichtung (12) Produkte (14) kontrolliert zu entfernen, falls sich ein Stau von Produkten (14), die der stromabwärts gelegenenen Produktionsfläche zugeführt werden, bildet; und
kontrolliertes Entfernen von Produkten (12) von der Förderbandvorrichtung (12) mittels der Speichervorrichtung, falls sich in der Speichervorrichtung zwischen deren Aus- und Einlaß eine Schlange von Produkten ausbildet; worin besagter Entfenlungsschritt die Einrichtung einer Einlaß-Schutzweiche (A) umfaßt, die entlang der Förderbandvorrichtung (12) in einem vorbestimmten Abstand stromaufwärts vom Einlaß in die Speichervorrichtung gelegen ist, und die eine nachfolgende relative stromabwärtige Verschiebung bewirkt, wobei das Verfahren dadurch gekennzeichnet ist, daß
die Einlaß-Schutzweiche (A) die Vorderkante eines jeden Produktes (14), das durch die Förderbandvorrichtung (12) dagegen transportiert wird, einrückt, und
die Schlange von Produkten (14) in einem stromabwärtigen Abstand relativ verschoben wird, so daß alle Produkte (14) stromabwärts zur Einlaß-Schutzweiche (A), die dort nicht eingerückt worden sind, stromabwärts zumindest bis zum Einlaß der Speichervorrichtung transportiert werden, so daß Produkte (14) durch die Speichervorrichtung ohne Beschädigung von der Förderbandvorrichtung (12) weggeräumt werden können, unabhängig von der relativen Position der Produkte (14) am Einlaß der Speichervorrichtung, immer wenn der Wegräumschritt beginnt, wobei besagter Abstand so gewählt wird, daß dieser wenigstens so groß ist, wie die Nennlänge der einzelnen Produkte (14), die mittels der Förderbandvorrichtung (12) transportiert werden.

2. Ein Verfahren nach Anspruch 1, worin besagter Abstand meistens in einen Bereich von etwa 3 Zentimetern bis etwa 10 Zentimetern fällt.

3. Ein Verfahren nach Anspruch 1, worin besagter Abstand ausgewählt wird, so daß meistens etwa die Nennlänge des Produktes zu besagtem vorbestimmten Abstand addiert wird.

4. Ein Verfahren nach Anspruch 3, worin besagter Abstand vom Anwender ausgewählt wird und meistens in einen Bcreich von etwa dem 1,3- bis etwa dem 1,7-fachen der Nennlänge der Produkte fällt.

5. Ein Verfahren nach Anspruch 1, worin besagter Einrückschritt das teilweise Einbringen eines Einrückteils (32) in den Produktweg umfaßt, so daß für Produkte (14) eine hinreichende Breite zum Vorbeilaufen an besagtem Einrückteil (32) verbleibt, wenn die Vorderkante eines derartigen Produktes (14) dieses bereits passiert hat, und stromaufwärts davon das Führen von Produkten, die sich relativ stromaufwärts auf der Förderbandvorrichtung (12) befinden, auf ein derartiges Einrückteil (32) zu, um dadurch eingerückt zu werden, wobei
besagter vorbestimmter Abstand meistens nicht größer als etwa das 1,7-fache der Nennlänge der Produkte (14) ist, die mittels der Förderbandvorrichtung (12) transportiert werden; und
besagter hinreichender Abstand vom Anwender gewählt wird und üblicherweise einen Bereich von etwa dem 1,3- bis zu etwa dem 1,7-fachen der Nennlänge der Produkte umfaßt, so daß die Produkte meistens etwa um eine Nennlänge der Produkte und um etwa einen derartigen vorbestimmten Abstand verschoben werden.

6. Ein Verfahren nach Anspruch 5, worin:
besagte Speichervorrichtung einen meistens vertikalen Fördermechanismus mit einer Mehrzahl von beabstandeten, nach außen verlängerten Mitnehmern (26) darauf umfaßt, zur Ansammlung von Produkten zwischen derartigen benachbarten Mitnehmern (26);
wobei besagter Wegräumschritt das Indizieren eines derartigen vertikalen Fördermechanismus umfaßt, um Produkte (14) von der Förderbandvorrichtung (12) wegzuräumen; und
wobei besagtes Verfahren ferner den Schritt des selektiven Wiederzuführens der Produkte (14) auf die Förderbandvorrichtung (12) umfaßt, die vorher mittels der Speichervorrichtung von dieser weggeräumt worden waren, falls sich innerhalb einer solchen Speichervorrichtung auf der Förderbandvorrichtung (12) keine Produkte (14) befinden.

7. Ein Verfahren nach Anspruch 6, worin:
besagtes Verfahren ferner den Schritt des selektiven Zürückhaltens aller Produkte (14) umfaßt, die von dem stromabwärtigen Ende der Speichervorrichtung während der normalen Betriebsvorgänge hervorgehen, um eine vorbestimmte Abstandslücke zwischen jeder vorbestimmten Anzahl von Produkten (14) aufrecht zu erhalten, die sich von dem stromabwärtigen Ende der Speichervorrichtung auf die stromabwärtige Produktionsfläche zubewegen, durch Sicherstellen der Anwesenheit von besagter vorbestimmter Abstandslücke, vor dem Freisetzen einer nachfolgenden vorbestimmten Anzahl von Produkten (14); und
worin besagter Wegräumschritt das Wegräumen von Produkten (14) einschließt, wenn die Schlange von Produkten (14) sich in der Speichervorrichtung entwickelt, bevor die vorbestimmte Abstandslücke zwischen den Produkten (14) auftritt, die aus dem stromabwärtigen Ende der Speichervorrichtung hervorgehen.

8. Ein Verfahren nach Anspruch 6, das ferner den Schritt einschließt, die Speichervorrichtung mit einer beweglichen Transferplatte zu versehen, die wirksam an der Förderbandvorrichtung (12) und an den entfernten Enden der nach außen verlängerten Mitnehmer (26) der Speichervorrichung gelegen ist, und daß dieses den Schritt der Positionskontrolle von ciner derartigen beweglichen Transferplatte während der Operationen des Wegräumens und Wiederzuführung Produkte (14) einschließt, um das Auftreten von seitlichen Verschiebungspunkten für die Produkte (14) zu verhindern, wenn diese in wechselseitige Richtungen bewegt werden.

9. Ein Verfahren der Überlastungssteuerung nach Anspruch 1, das die Verhinderung einschließt, daß sämtliche Produkte (14) die Austrittsseite der Speichervorrichtung verlassen; und
wobei eine Folge des Wegräumens von Produkten veranlaßt wird, falls der Verhinderungsschritt zu einer Schlange von Produkten (14) führt, die sich durch die Speichervorrichtung von deren Austrittsseite bis zurück zu deren Eintrittsseite erstreckt;
wobei der Verhinderungsschritt bei normalen Betriebsvorgängen ausgeführt wird, bis vorbestimmte Anzahlen von Produkten (14), die vorher daraus freigegeben worden sind, einen Sensorpunkt längs des Förderbandes (12) von der Speichervorrichtung eine vorbestimmte Strecke stromabwärts auf die zweite Arbeitsstation zu passiert haben, um eine vorbestimmte Abstandslücke zwischen vorbestimmten Anzahlen von Produkten (14), die aus der Auslaßseite der Speichervorrichtung hervorgehen, aufrecht zu erhalten, und eine derartige Folge des Wegräumens von Produkten umfaßt das Einrichten einer Sammelstelle an der Schutzweiche (A) für die Vorderkante des nächsten Produktes, das sich der Schutzweiche aus Richtung der ersten Arbeitsstation nähert; wobei die Produkte (14) innerhalb der Schlange in der Speichervorrichtung um eine stromabwärts gerichtete Strecke relativ verschoben werden, so daß jeder Teil der Produkte (14), die sich stromabwärts von der Schutzweiche (A) befinden, hinten den seitlichen Verschiebungspunkt am Einlaß der Speichervorrichtung verschoben werden, während Produkte, die sich stromaufwärts zur Schutzweiche (A) befinden, dort festgehalten werden; und wobei die Speichervorrichtung zum Wegräumen der Produkte (14) von dem Förderband (12) innerhalb der Speichervorrichtung danach so betrieben wird, so daß Produkte (14) von dem Liniendruck entlang des Förderbandes (12) isoliert werden und unabhängig von ihrer anfänglichen Position sicher hinter potentielle Produkt-Verschiebungspunkte geleitet werden, um während ihres Wegräumens eine Beschädigung an den Verschiebungspunkten zu verhindern, und worin besagte Strecke so gewählt wird, um wenigstens so groß wie die Nennlänge der einzelnen Produkte (14) zu sein, die über die Förderbandvorrichtung (12) transportiert werden.

10. Ein Verfahren nach Anspruch 9, worin das Einrichten besagter Sammelstelle das Einbringen eines Anhalteteils (32) über einen Teil des Förderbandes (12) umfaßt, wobei die verbleibende Breite des Förderbandes größer als die Nennlänge (38) der einzelnen Produkte (14) ist, die sich entlang des Förderbandes (12) fortbewegen, so daß die Produkte (14), die seitlich auf ein derartiges Anhalteteil treffen, diese dabei fortfahren, während ein Produkt (14), dessen Vorderkante auf ein derartiges Anhalteteil (32) trifft, von diesem festgehalten wird.

11. Ein Verfahren nach Anspruch 10, worin das Einrichten besagter Sammelstelle das Einbringen eines Führungsteils (40) relativ stromaufwärts von dem Anhalteteil (32) über einen Teil des Förderbandes (12) umfaßt, um stromaufwärtige Produkte (14) in den nachfolgenden Eingriff der Vorderkante in ein derartiges Anhalteteil (32) zu führen, um dadurch aufgehalten zu werden.

12. Ein Verfahren nach Anspruch 11, worin besagter stromabwärtiger Abstand sich meistens in einem Bereich von etwa dem 1,3- bis etwa dem 1,7-fachen der Nennlänge der Produkte bewegt.

13. Ein Verfahren nach Anspruch 10, worin das Einrichten besagter Sammelstelle das Ablenken von Produkten (14) umfaßt, die sich unmittelbar stromabwärts zu besagtem Anhalteteil (32) befinden, weg von einer seitlichen Kante (76) des Förderbandes (12) näher zu besagtem Anhalteteil (32), um den Betrieb von besagtem Führungsteil (34) an den nicht festgehaltenen Produkten auszugleichen.

14. Ein Verfahren nach Anspruch 1, worin:
die Speichervorrichtung eine meistens vertikale Vorrichtung vom Rolltreppentyp umfaßt, die einen sich bewegenden Gurt mit einer darauf befindlichen Vielzahl von nach außen verlängerten Teilen aufweist, welche die Mitnehmer (26) bilden, zwischen denen Gruppen von Produkten (14) off-line von dem Förderband (12) untergebracht und angesammelt sein können;
wobei besagte Speichervorrichtung ferner eine Auslaß Bremsvorrichtung (82) einschließt, um den Fluß von Produkten (14) an der Auslaßseite der Speichervorrichtung selektiv anzuhalten; und
wobei besagtes Verfahren ferner das Rückführen von Produkten (14) auf das Förderband umfaßt, die vorher davon entfernt worden sind, wenn sich keine Produkte (14) zwischen den Einlaß- und Auslaßseiten der Speichervorrichtung befinden.

15. Ein Verfahren nach Anspruch 10, worin die Produkte keimfreie Papierbebälter enthalten, die erste Arbeitsstation eine Befüllvorrichtung enthält, und die zweite Arbeitsstation entweder einen Applikator von Verpackungsmaterial oder eine Verpackungsvorrichtung enthält, und worin der Verhinderungsschritt die Freigabe von Produkten (14) in Gruppen einer vorbestimmten Anzahl umfaßt.

16. Ein Verfahren zur Überlastungssteuerung nach Ansprüchen 1 oder 9, das das kontrollierte Entfernen von Produkten (14) von der Förderbandvorrichtung (12) mittels der Speichervorrichtung umfaßt, falls sich eine Schlange von Produkten (14) in der Speichervorrichtung entwickelt, bevor sich Produkte (14), die aus der Speichervorrichtung herauskommen, sich auf die stromabwärtige Produktionsfläche zubewegen können; worin
besagte Speichervorrichtung einen meistens vertikalen Förderband Mechanismus einschließt mit einer darauf befindlichen Vielzahl von beabstandeten, nach außen verlängerten Mitnehmern (26) zur Ansammlung von Produkten (14) zwischen derartigen benachbarten Mitnehmern (26), wobei besagter Entfernungsschritt das Indizieren eines derartigen vertikalen Förderband Mechanismus einschließt, um von der Förderbandvorrichtung (12) eine Reihe von Produkten (14) zu entfernen, die innerhalb der Speichervorrichtung aufgereiht sind und eine Einheit von Produkten (14) bildet, die sich meistens entlang der Länge des vertikalen Fördermechanismus erstrecken; und worin
besagte Speichervorrichtung ferner einen Auslaß Verschiebemechanismus (82) einschließt, der relativ unmittelbar stromabwärts von den stromabwärtigen Kanten der Vielzahl der nach außen verlängerten Mitnehmer (26) angeordnet ist, und dessen Betrieb es gestattet, die aus der Speichervorrichtung zu entfernenden Produkte (14) während des Entfernungsschrittes und vor dem Indizieren des vertikalen Fördermechanismus um eine vorgewählte Gesamtstrecke relativ stromabwärts zu verschieben, während der Fluß von anderen Produkten (14), die sich der Speichervorrichtung nähern, angehalten wird, wobei eine derartige vorgewählte Gesamtstrecke die Länge eines auf der Förderbandvorrichtung (12) geförderten Produktes (14) einschließt, zu der ein vorbestimmter fester Abstand addiert wird, so daß die Verschiebungspunkte der Produkte an den stromabwärtigen und stromaufwärtigen Kanten der Mitnehmer (26) während des Entfernungsschrittes sicher verhindert werden, unabhängig von den anfänglichen Positionen der Produkte längs der Förderbandvorrichtung (12).

17. Ein Verfahren nach Anspruch 16, das ferner einschließt:
das selektive Zurückhalten von Produkten (14), die aus dem stromabwärtigen Ende der Speichervorrichtung hervorgehen, um eine vorbestimmte Abstandslücke zwischen benachbarten Produkten (14) oder vorbestimmten Gruppen voo Produkten (14) aufrecht zu erhalten, die sich in Richtung der stromabwärtigen Produktionsfläche bewegen; und worin
besagter Entfernungsschritt das Entfernen von Produkten (14) von der Förderbandvorrichtung (12) einschließt, falls die Schlange von Produkten (14) sich innerhalb der Speichervorrichtung entwickelt, bevor die vorbestimmte Abstandslücke zwischen den aus der Speichervorrichtung hervorgehenden Produkten (14) oder besagten vorbestimmten Gruppen von Produkten (14) sich entwickelt; und worin
besagtes Verfahren ferner das Zurückhalten von wenigstens einem Produkt umfaßt, daß sich während des Entfernungsschrittes unmittelbar benachbart zu besagtem Auslaß Verschiebemechanismus (82) befindet, und anschließend das Bewegen solcher zurückgehaltenen Produkte (14) relativ stromaufwärts, um die aufrechtzuerhaltende vorbestimmte Abstandslücke wieder herzustellen, welche Lücke anderenfalls verringert wird, immer wenn es Produkten anfänglich gestattet wird, sich relativ stromabwärts gegen besagten Auslaß Verschiebemechanismus (82) zu verschieben.

18. Ein Verfahren nach Anspruch 16, das ferner eine Einlaß Fangvorrichtung (66) einschließt, die meistens um etwa besagten vorbestimmten festen Abstand stromaufwärts zur Speichervorrichtung gelegen ist, um das nächste Produkt (14) anzuhalten, das stromaufwärts davon gelegen ist, und dessen Vorderkante bislang noch nicht besagte Einlaß Fangvorrichtung (66) erreicht hat, so daß besagte Einlaß Fangvorrichtung (66) zum Anhalten eines derartigen Produktes (14) wirksam ist, ohne irgendeine Klemmkraft darauf oder auf irgendwelche anderen Produkte (14), die mittels der Förderbandvorrichtung (12) transportiert werden, auszuüben.

19. Ein Verfahren nach Anspruch 9, worin besagter Schritt des Einrichtens einer Sammelstelle durchgeführt wird, indem die Vorderkante eines Produktes, das sich einer ausgewählten Schutzweiche (A) stromaufwärts von besagter Speichervorrichtung nähert, klemmfrei angehalten wird, worin die Speichervorrichtung meistens eine vertikale Vorrichtung vom Rolltreppentyp einschließt, die einen sich bewegenden Gurt aufweist, mit einer darauf befindlichen Vielzahl von nach außen verlängerten Teilen (26), die Mitnehmer bilden, zwischen denen Gruppen von Produkten (14) off-line von dem Förderband (12) untergebracht und angesammelt sein können, und worin besagte Speichervorrichtung weiterhin eine klemmfreie Produktanhaltevorrichtung (32) und eine Auslaß Bremsvorrichtung (90) umfaßt, um den Fluß von Produkten selektiv an den Einlaß- beziehungsweise an den Auslaßseiten der Vorrichtung zu unterbrechen; und
worin der Verschiebeschritt das Aufstellen eines einstellbaren Auslaß Verschiebungsteils (94) in die Strombahn der Produkte (14) längs des Förderbandes (12) an einem ausgewählten Punkt relativ geradewegs Stromabwärts zu der Auslaß Bremsvorrichtung (90) umfaßt, und danach die Auslaß Bremsvorrichtung (90) freizugeben, um der sich durch die Speichervorrichtung erstreckenden Schlange von Produkten zu gestatten, sich abwärts zu verschieben in den Eingriff mit einem derartigen Auslaß Verschiebungsteil (94) in eine dazu stromabwärts verschobene Position, so daß diese Produkte (14) stromabwärts um besagten vorgewählten Gesamtabstand verschoben werden, der der Länge eines derartigen Produktes (14) zuzüglich eines vorbestimmten festen Abstands entspricht, so daß stromaufwärts davon angeordnete Produkte sauber von dem Förderband (12) entfernt werden können, ohne daß das Produkt (14) einer Beschädigung am Verschiebungspunkt unterliegt.

20. Ein Verfahren nach Anspruch 19, worin:
besagte klemmfreie Einlaß Produktanhaltevorrichtung (32) sich etwa um besagten vorbestimmten festen Abstand stromaufwärts zu der Speichervorrichtung befindet und die Unterbrechung der Annäherung der Vorderkante des nächsten sich nähernden Produktes (14) bewirkt, ohne die Bewegung eines jeden Produktes (14) zu unterbrechen, dessen Vorderkante besagte Einlaß Produktanhaltevorrichtung (32) bereits passiert hat;
wobei die Nennlänge von einzelnen Produkten, die zu einer gegebenen Zeit entlang des Förderbandes (12) bewegt werden, meistens in einen Bereich von etwa 3,81 bis 7,62 cm (1 1/2 Inch bis etwa 3 Inch) fällt; und
der Abstand des stromabwärtigen Verschiebens des Auslaß Verschiebungsteils (94) so einjustiert wird, um mit der Nennlänge des Produktes in Einklang zu stehen.

21. Ein Verfahren nach Anspruch 20, worin nach dem Entfernen der Produkte (14) vom Förderband (12) wenigstens ein stromabwärtiges hinter die Speichervorrichtung verschobenes Produkt (14) stomaufwärts durch die umgekehrte Operation des Auslaß Verschiebungsteils (94) verlagert und danach mit der Auslaß Bremsvorichtung (92) wieder geklemmt wird, wonach weiterhin das Auslaß Verschiebungsteil (94) von der Strombahn der Produkte entlang des Förderbandes (12) entfernt wird, bis eine nachfolgende Folge der Entfernung von Produkten begonnen wird, so daß derartige stromaufwärtige Verlagerungs- und Wiederklemmschritte die Ausführung eines nachfolgenden stromabwärtigen Verschiebungsschrittes für die nachfolgenden Produktentfernungs Sequenzen gestatten.

22. Eine Speichervorrichtung für eine Vorrichtung zur Behandlung von Produkten in einer Anordnung zur Ausführung des Verfahrens nach Anspruch 9 in Anbetracht von einem Produkt mit einer vorbestimmten Nennlänge, wobei die Vorrichtung meistens von dem Typ ist, der ein vertikal orientiertes Förderband besitzt, mit einer Vielzahl beabstandeter, nach außen verlängerter Mitnehmer (26), um dazwischen Produkte (14) anzusammeln, mit einem Indizieren von einem derartigen Förderband (12) in ausgewäblten Richtungen, das abwechselnd in einem Entfernen oder einer Zurückgabe von Produkten (14) resultiert, bezogen auf eine Trägeroberfläche einer Fertigungsstraße, mit der eine solche Speichervorrichtung in einer derartigen Weise assoziiert ist, daß in Anbetracht der verlängerten Mitnehmer (26), die in einer Nullposition gelegen sein können, diese zur Passage von Produkten (14) dadurch auf der Fertigungsstraße bewegt werden, wobei derartige Mitnehmer (26) als Führungsgeleise dienen, und Auslaß Verschiebevorrichtungen (82), die relativ benachbart zum Auslaß der Speichervorrichtung sind, und zum selektiven Verschieben von Produkten (14) um einen ausgewählten stromabwärtigen Abstand betrieben werden, Einlaß Fangvorrichtung (32) relativ benachbart zum Einlaß in die Speichervorrichtung in einem ausgewählten stromaufwärtigen Abstand davon, charakterisiert dadurch, daß: die Einlaß Fangvorrichtung (32) zum selektiven Fassen ohne Anwendung einer Klemmkraft der Vorderkante des nächsten Produktes (14) betrieben wird, dessen Vorderkante sich stromaufwärts dazu befindet, wobei besagte stromabwärtige Entfernung wenigstens so groß ist, wie die Nennlänge eines der Produkte der Fertigungsstraße, so daß eine kooperative Betätigung von besagter Auslaß Verschiebevorrichtung (82) und von besagter Einlaß Produktfangvorrichtung das Auftreten von Produkt Verschiebungspunkten in der Nachbarschaft der Einlaßecken der Förderband Mitnehmer (26) verhindert.

23. Eine Vorrichtung nach Anspruch 22, worin die Entfernung der Nennlänge der Produkte der Fertigungsstraße zuzüglich einer ausgewählten stromaufwärtigen Entfernung entspricht.

24. Eine Vorrichtung nach Anspruch 23, worin die besagte stromaufwärtige Entfernung meistens in den Bereich von etwa 30 Prozent bis etwa 70 Prozent der Nennlänge der Produkte der Fertigungsstraße fällt.

25. Eine Vorrichtung nach Anspruch 24, worin die Verschiebungsstrecke von besagter Verschiebevorrichtung einstellbar ist, um die Speichervorrichtung an den Einsatz von Produkten unterschiedlicher Länge und einem ausgewählten stromaufwärtigen Abstand anzupassen.

26. Eine Vorrichtung nach einem der Ansprüche 22 bis 25, worin besagte Auslaß Verschiebevorrichtung selektiv in eine Produktbetätigungs Position eingebracht und daraus entfernt werden kann, bezogen auf die Trägeroberfläche (12) der Fertigungsstraße, und worin besagte Auslaß Verschiebevorrichtung (82) Kolben Stelleinrichtung (98) zur selektiven Verschiebekontrolle umfaßt, deren ausgefahrene und zurückgefahrene Positionen beide einstellbar sind, so daß sowohl der besagte ausgewählte stromabwärtige Abstand als auch deren Anordnung in Bezug auf die Fertigungsstraße eingestellt werden können.

27. Eine Vorrichtung nach einem der Ansprüche 22 bis 25, worin besagte Einlaß Produkt Fangvorrichtung (32) ein Paar eines ersten und eines zweiten Bauteils umfaßt, das an einander gegenüberliegenden Längsseiten der Fertigungsstraße tätig ist, worin besagtes erstes Teil eine Anhalteplatte (32) umfaßt, die über einen begrenzten Teil der Trägeroberfläche (12) der Fertigungsstraße (12) eingebracht wird, so daß ein Raum verbleibt, der größer als die Nennbreite (38) eines Produktes (14) der Fertigungsstraße ist, und worin besagtes zweites Teil relativ stromaufwärts zu besagtem ersten Teil angeordnet ist und eine Ablenk Leiteinrichtung (34) umfaßt, die in einen begrenzten Teil der Trägeroberfläche (12) der Fertigungsstraße (12) eingebracht wird, so daß ein Raum verbleibt, der größer als die Nennbreite des Produktes ist, aber welches Einbringen des zweiten Teils die an einer derartigen Ablenk Leiteinrichtung auftreffenden Produkte (14) veranlaßt, sich zu einem Teil der Trägeroberfläche (12) der Fertigungsstraße (12) zu bewegen, was zur Folge hat, daß die Vorderkante von jedem dieser Produkte (14) nachfolgend besagte Anhalteplatte (32) betätigt.

28. Eine Vorrichtung nach Anspruch 27, worin besagte Anhalteplatte (32) und besagte Ablenk Leiteinrichtung (34) jeweils von Kolben Stelleinrichtungen eingerückt werden, die gemeinsam kontrolliert werden.

29. Produkt-Behandlungsvorrichtung zur Kontrolle des Flusses von Produkten (14), die sich gemäß dem Verfahren nach Anspruch 9 entlang eines Förderbandes (12) von einer ersten Arbeitsstation zu einer zweiten Arbeitsstation bewegen, wobei besagte Vorrichtung umfaßt:
eine Speichervorrichtung nach Anspruch 22, die in der Nähe des Förderbandes (12) zwischen der ersten und zweiten Arbeitsstation angeordnet ist, zum kontrollierten und abwechselnden Entfernen und Zutückführen von Produkten (14) in Bezug auf das Förderband (12) wobei besagte Speichervorrichtung jeweils Einlaß- und Auslaßseiten aufweist, zwischen denen Produkte (14) meistens abwechselnd vom Förderband (12) entfernt und auf dieses zurückgeführt werden können;
klemmfreie Einlaß Produkt Fangvorrichtung (10), die mit besagter Einlaßseite der Speichervorrichtung verbunden ist, um kontrolliert zum Anhalten des Eintritts von Produkten (14) längs des Förderbandes (12) in besagte Einlaßseite der Speichervorrichtung betrieben werden zu können, ohne daß eine Klemmkraft angewendet werden muß, welche Produkte (14) noch deren Vorderkante stromaufwärts zu besagter Fangvorrichtung (10) haben;
Auslaß Bremsvorrichtung (90), die mit besagter Auslaßseite der Speichervorrichtung verbunden ist, um kontrolliert zum Anhalten von Produkten (14) längs des Förderbandes betrieben werden zu können, die aus der Auslaßseite von besagter Speichervorrichtung hervortreten;
stromabwärtige Sensorvorrichtung zum Feststellen der Passage von Produkten (14), die längs des Förderbandes (12) in einem vorbestimmten Abstand stromabwärts zu besagter Auslaßseite der Speichervorrichtung gelegen ist,
Auslaß Verschiebevorrichtung (82), die kontrolliert für die selektive Bewegung in die Bahn der Produkte (14) längs des Förderbandes (12) und aus dieser hinaus betrieben werden kann, stromabwärts zu besagter Auslaß Bremsvorrichrung (90) und stromaufwärt zu besagter stromabwärtiger Sensorvorrichtung, wobei besagte Auslaß Verschiebevorrichtung (82) auch kontrolliert zum relativen Verschieben von stromabwärtigen Produkten (14) entlang des Förderbandes (12) um eine einstellbare, vom Anwender wählbare Strecke, die größer als wenigstens die Länge eines der sich längs des Förderbandes (12) bewegenden Produkte (14) ist, eingesetzt werden kann; und
Kontrollvorrichtung, die jeweils wirksam mit besagter Speichervorrichtung, klemmfreier Einlaß Produkt Fangvorrichtung (32), Auslaß Bremsvorrichtung (90), stromabwärtiger Sensorvorrichtung und Auslaß Verschiebevorrichtung (82) verbunden ist, um zeitweilig Produkte (14) off-line vom Förderband (12) anzusammeln, immer wenn sich eine übermäßige Anzahl von Produkten (14) zwischen der ersten und der zweiten Arbeitsstation aufstaut;
worin besagte Kontrollvorrichtung in einem normalen Betreibsmodus arbeitet und abwechselnd besagte Auslaß Bremsvorrichtung (90) betätigt und freigibt, um Produkte (14) am Verlassen besagter Auslaßseite der Speichervorrichtung zu hindern, bis eine vorbestimmte Anzahl von vorher freigegebenen Produkten besagte Sensorvorrichtung passiert haben, und worin besagte Kontrollvorrichtung in einer Produktentfernungs Betreibsweise arbeitet, immer wenn die Betätigung von besagter Auslaß Bremsvorrichtung (90) in der normalen Betriebsweise in einer Schlange von Produkten (14) resultiert, die sich durch die Speichervorrichtung von deren besagter Auslaßseite bis zurück zu deren besagter Einlaßseite erstreckt;
und worin eine derartige Produktentfernungs Betriebsweise das Betätigen der klemmfreien Einlaß Produkt Fangvorrichtung (10) einschließt, um die Vorderkante des nächst benachbarten stromaufwärtigen Produktes (14) auf dem Förderband (12) davon abzuhalten, in die besagte Einlaßseite der Speichervorrichtung einzutreten, Freigeben von besagter Auslaß Bremsvorrichtung (90) und Betätigen von besagter Auslaß Verschiebevorrichtung (82), um ein relatives stromabwärtiges Verschieben der Produkte (14) auf dem Förderband (12) innerhalb besagter Speichervorrichtung um besagte einstellbare, vom Anwender wählbare Entfernung zu gestatten, und Kontrollieren von besagter Speichervorrichtung zum Entfernen von solchen Produkten (14) vom Förderband (12), so daß die Produkt Verschiebepunkte während der Produktentfernung, unabhängig von der anfänglichen Position der Produkte (14) in Bezug auf die Einlaßseite der Speichervorrichtung oder der Anzahl der während einer vorgegebenen Produktentfernungs Sequenz entfernten Produkte (14), sicher eliminiert werden.

30. Eine Produkt-Behandlungsvorrichtung nach Anspruch 29, worin:
besagte Kontrollvorrichtung während der Abwesenheit von irgendwelchen Produkten (14) auf dem Förderband (12) innerhalb besagter Speichervorrichtung in einer derartigen Weise funktioniert, daß Produkte (14) zu einem derartigen Förderband (12) zurückgeführt werden, die vorher davon durch besagte Speichervorrichtung entfernt worden waren;
wobei besagte Speichervorrichtung feste Führungsteile (24,86) umfaßt, meistens senkrecht zur Vorwärtsrichtung (16) des Förderbandes (12) und durch einen vorbestimmten Abstand von den jeweiligen Einlaß- und Auslaßecken von besagten nach außen verlängerten Mitnehmern (26) des vertikalen Fördermechanismus getrennt, um das Entkommen von Produkten (14) von derartigen Mitnehmern (26) an deren Einlaß- und Auslaßecken zu unterbinden;
wobei besagte klemmfreie Einlaß Produkt Fangvorrichtung (32) in einem vorbestimmten Abstand stromaufwärts zu den Einlaßecken von besagten nach außen verlängerten Mitnehmern (26) des vertikalen Fördermechanismus gelegen ist; und
wobei besagte stromabwärtige Verschiebestrecke mindestens etwa gleich der Nennlänge der einzelnen Produkte, die sich entlang des Förderbandes (12) vorwärts bewegen, zuzüglich besagten vorbestimmten Abstands ist, so daß die anzusammelnden Produkte (14) wenigstens stromabwärts hinter das feste Führungsteil (24) auf der Einlaßseite der Speichervorrichtung sicher vorbewegt werden, um das Auftreten irgendwelcher Produkt Verschiebungspunkte zwischen derartigen Führungsteilen und den anzusammelnden Produkten zu verhindern, und gegebenenfalls sich längs des Förderbandes bewegende Produkte (12), die Verpackungen auf Papierbasis enthalten und eine Nennlänge von etwa 3,81 bis 7,62 cm (1 1/2 Inch bis etwa 3 Inch) haben und mit flüssigen Materialien gefüllt sind, wobei die erste Arbeitsstation eine Befüllvorrichtung enthält, die zweite Arbeitsstation entweder einen Applikator von Verpackungsmaterial oder eine Verpackungsmaschine enthält und besagte vorbestimmte Anzahl von vorher freigesetzten Produkten 3 ist.

31. Produkt-Behandlungsvorrichtung nach Anspruch 30, worin besagte Auslaß Verschiebevorrichtung (82) umfaßt:
ein kontrollierbares Produkt Eingriffsteil (94);
Eingriffs Betätigungvorrichtung (96) fiir das selektive Positionieren von besagtem Produkt Eingriffsteil (94) zwischen einer ersten Position davon relativ geradewegs stromabwärts zur Speichervorrichtung und relativ in der Nähe des Förderbandes (12), um die Vorwärtsbewegung von Produkten (14) darauf anzuhalten, und einer zweiten Position davon, die hinreichend vom Förderband (12) versetzt ist, um keine darauf befindlichen Produkte (14) zu berühren; und
Verschiebe Betätigungsvorrichtung (98) zum selektiven Verschieben von besagtem Produkt Eingriffsteil (94) mit dagegen empfangenen Produkten zwischen einer ersten Position davon und einer dritten Position davon, relativ nahe zum Förderband (12) um die Fortbewegung von Produkten von da und stromabwärts von besagter erster Position durch eine Gesamtverschiebungsstrecke anzuhalten, die sich aus einer vorbestimmten minimalen Verschiebungsstrecke, addiert zur Nennlänge eines auf dem Förderband (12) bewegten Produktes, zusammensetzt.

32. Produkt-Behandlungsvorrichtung nach Anspruch 30, worin besagte klemmfreie Einlaß Produkt Fangvorrichtung (10) ein Paar von ersten und zweiten Teilen (32, 34) umfaßt, die an gegenüberliegenden Längsseiten des Förderbandes (12) tätig sind, worin besagtes erstes Teil eine Anhalteplatte (32) umfaßt, die in einen begrenzten Teil des Förderbandes (12) eingebracht wird, so daß ein Raum verbleibt, der größer ist als die Nennbreite (38) eines sich fortbewegenden Produktes (14), und worin besagtes zweites Teil (32) relativ stromaufwärts zu besagtem ersten Teil (32) angeordnet ist und eine Ablenk Leiteinrichtung (34) umfaßt, die in einen begrenzten Teil des Förderbandes (12) eingebracht wird, so daß ein Raum verbleibt, der größer als die Nennbreite (38) des Produktes ist, aber welches Einbringen des zweiten Teils (34) die an einer derartigen Ablenk Leiteinrichtung auftreffenden Produkte (14) veranlaßt, sich zu einem Teil des Förderbandes (12) zu bewegen, was zur Folge hat, daß die Vorderkante von jedem dieser Produkte (14) nachfolgend besagte Anhalteplatte (32) betätigt.

33. Eine Vorrichtung oder eine Produkt-Behandlungsvorrichtung nach jedem der Ansprüche 22 bis 32 umfassend eine Einlaß Produkteingriffsvorrichtung, enthaltend:
Unterbrechungsvorrichtung (32) zum selektiven Unterbrechen der Produktbewegung in wenigstens einem ersten Teil der sich bewegenden Bahn des Förderbandes (12), der relativ stromaufwärts von der Speichervorrichtung gelegen ist; und
Führungsvorrichtung (34), die relativ stromaufiwärts von der Unterbrechungsvorrichtung (32) gelegen ist, zum selektiven Führen von Produkten, die auf dem Förderband (12) in die Bahn des ersten Teils befördert werden, so daß die stromabwärtige Bewegung von derartigen geführten Produkten (14) nachfolgend durch besagte Unterbrechungsvorrichtung (32) unterbrochen wird.

34. Eine Vorrichtung oder eine Produkt-Behandlungsvorrichtung nach Anspruch 33, worin besagte Unterbrechungsvorrichtung (32) ein bewegliches Anhalteteil (32) enthält zum kontrollierten Bewegen zwischen einer ersten Position seitlich in der Nähe der Bahn des Förderbandes und und einer zweiten Position, die sich über einen Teil der Bahn des Förderbandes erstreckt und die den ersten Teil davon enthält, so daß der verbleibende nicht unterbrochene Teil der Bahn des Förderbandes eine Breite aufweist, die größer ist als die Nennbreite (38) von Produkten (14), die längs des Förderbandes (12) zugeführt werden.

35. Eine Vorrichtung oder eine Produkt-Behandlungsvorrichtung nach Ansprüchen 33 oder 34, worin besagtes bewegliches Anhalteteil eine mittels Kolben betätigte Gleitplatte (32) umfaßt, die sich im wesentlichen senkrecht zur Bahn des Förderbandes erstreckt, und wobei zum Beispiel der Kolben (68) für besagte Gleitplatte (32) meistens etwa in einem rechten Winkel zu der Bewegungslinie (16) von besagter Platte (32) ausgerichtet ist und mit einer Vorrichtung verbunden ist, die die Bewegung eines derartigen Kolbens (16) in Bewegung von einer derartigen Platte entlang deren Bewegungslinie überträgt.

36. Eine Vorrichtung oder eine Produkt-Behandlungsvorrichtung nach Ansprüchen 33 oder 34, die ferner eine feste Ablenkvorrichtung (74) umfaßt, die relativ stromabwärts zu besagtem beweglichen Anhalteteil (32) montiert ist, und die sich in einen Teil der Bahn des Förderbandes erstreckt, der nicht unterbrochen wird, immer wenn besagtes bewegliches Anhalteteil (32) diese erste Position annimmt, zum Ablenken von Produkten (14) weg von der seitlichen Kante (76) der Bahn des Förderbandes, die sich in der Nähe von besagtem beweglichen Anhalteteil (32) befindet.

37. Eine Vorrichtung oder eine Produkt-Behandlungsvorrichtung nach Ansprüchen 33 oder 34, worin besagte Führungsvorrichtung (10) ein bewegliches Produktführungsteil (34) umfaßt für die kontrollierte Bewegung zwischen einer ersten Position, die sich seitlich in der Nähe der Bahn des Förderbandes auf der gegenüberliegenden Seite von besagtem beweglichen Anhalteteil (32) befindet, und einer zweiten Position, die sich über einen Teil der Bahn des Förderbandes erstreckt, so daß sich darauf befindliche Produkte (14) hin zu besagtem ersten Teil der Bahn geführt werden, und besagtes bewegliches Produktführungsteil (34) beispielsweise ein mittels Kolben betätigtes keilförmiges Teil (34) enthält, dessen Betätigung mit der Betätigung von besagtem beweglichen Anhalteteil (34) koordiniert wird.

38. Eine Vorrichtung oder eine Produkt-Behandlungsvorrichtung nach einem der Ansprüche 22 bis 36 umfassend eine Auslaß Produkt Eingriffsvorrichtung enthaltend:
ein kontrollierbares Produkt Eingriffsteil (94);
Eingriffs Betätigungseinrichtung (96) für das selektive Positionieren von besagtem Produkt Eingriffsteil (94) zwischen einer ersten Position davon relativ geradewegs stromabwärts zur Speichervorrichtung und relativ in der Nähe des Förderbandes (12), um die Vorwärtsbewegung von Produkten (14) längs deren Bahn anzuhalten, und einer zweiten Position davon, die hinreichend vom Förderband (12) versetzt ist, um keine darauf befindlichen Produkte (14) zu berühren; und umfassend
Verschiebungs Betätigungsvorrichtung (98) zum selektiven Verschieben von besagtem Produkt Eingriffsteil (94) mit dagegen empfangenen Produkten zwischen einer ersten Position davon und einer dritten Position davon relativ nahe zum Förderband (12), um die Fortbewegung von Produkten (14) von da und stromabwärts von besagter erster Position durch eine Gesamtverschiebungsstrecke anzuhalten, die sich aus einer vorbestimmten minimalen Verschiebungsstrecke, addiert zur Länge eines auf dem Förderband (12) bewegten Produktes, zusammensetzt, während das Zuführen von Produkten (14) in das stromaufwärtige Ende der Speichervorrichtung kontrolliert wird, so daß Produkte (14), die vom Förderband (12) mit der Speichervorrichtung entfernt werden sollen, in kontrollierter Weise relativ dazu vor einer derartigen Entfernung verschoben werden können, um Produkt Verschiebungspunkte zwischen der Speichervorrichtung und derartigen Produkten (14) und zwischen der Speichervorrichtung und Produkten, die auf dem Förderband (12) verbleiben, zu verhindern.

39. Eine Vorrichtung oder eine Produkt-Behandlungsvorrichtung nach Anspruch 38, worin besagte Verschiebungs Betätigungsvorrichtung (98) Verschiebungs Justiervorrichtungen für das vom Anwender gewählte Einstellen der gesamten Verschiebungsstrecke umfaßt.

40. Eine Vorrichtung oder eine Produkt-Behandlungsvorrichtung nach Anspruch 39, worin besagte Verschiebungs Betätigungsvorrichtung (98) eine kontrollierbare Kolben Stelleinrichtung umfaßt für die kontrollierte Bewegung von besagtem Produkt Eingriffsteil, und besagte Verschiebungs Einstellungsvorrichtung (98) schließt ein einstellbares Anhalteteil (118) ein, dessen vom Anwender gewählte Position besagte dritte Position von besagtem Produkt Eingriffsteil (94) begründet, so daß ein Anwender besagte Gesamtverschiebungsstrecke selektiv einstellen kann, und die Vorrichtung gegebenenfalls weiter eine Einstellvorrichtung (130) für die erste Position enthält, für das vom Anwender auszuwählende Einstellen der Position von besagter kontrollierbarer Kolben Stelleinrichtung, so daß ein Anwender die erste Position von besagtem Produkt Eingriffsteil selektiv einstellen kann.

41. Eine Vorrichtung oder eine Produkt-Behandlungsvorrichtung nach Anspruch 38, worin:
besagte Eingriffs Betätigungsvorrichtung (96) mittels eines Kolbens von einem ersten Kolben (110) verstellt wird, der meistens eine vertikale Achse senkrecht zur Bahn des Förderbandes aufweist, wobei ein solcher erster Kolben (110) beim Ausrücken besagtes Produkt Eingriffsteil (94) in dessen besagter erster Position plaziert, und beim Zurückziehen, besagtes Produkt Eingriffsteil (94) in dessen besagter zweiter Position plaziert; und
besagte Verschiebe Betätigungsvorrichtung (98) mittels eines Kolbens von einem zweiten Kolben (128) verstellt wird, der meistens eine horizontale Achse parallel zur Bahn des Förderbandes aufweist, wobei ein solcher zweiter Kolben (128) beim Ausrücken besagtes Produkt Eingriffsteil (94) in dessen besagter erster Position plaziert, und beim Zurückziehen besagtes Produkt Eingriffsteil (94) in dessen besagter dritter Position plaziert, und gegebenenfalls:
können besagte erste und zweite Kolben (110, 128) gleichzeitig für die gleichzeitige Bewegung von besagtem Produkt Eingriffsteil (94) entlang zweier Achsen betätigt werden; und
besagter erster Kolben (110) umfaßt wenigsten eine bewegliche Befestigung in Bezug auf besagtes Produkt Eingriffsteil (94), um eine vom Anwender gewählte Einstellung des Ortes von besagter erster Position, bezogen auf ein stromabwärtiges Ende der Speichervorrichtung zu gestatten.

42. Ein Verfahren nach Anspruch 1, worin besagter Einrückschritt das teilweise Einschränken der Produktbahn auf der Förderbandvorrichtung (12) ohne Anwendung irgendeiner Klemmkraft auf die Produkte (14) umfaßt, und ein Einrückteil (32) teilweise in die Bahn der Produkte eingebracht wird, so daß eine angemessene Breite für die Produkte (14) verbleibt, besagtes Einlückteil (32) zu passieren, falls die Vorderkante von derartigen Produkten (14) bereits daran vorbeigelaufen ist, während stromaufwärts von besagtem Einrückteil (32) Produkte, die sich relativ stromaufwärts auf der Förderbandvorrichtung befinden, auf ein derartiges Einrückteil (32) geleitet werden, so daß diese dadurch eingerückt werden.

## Revendications

1. Procédé de contrôle de surcharge pour des produits (14) qui sont transportés via un moyen à bande transporteuse mobile (12) dans une direction aval prédéterminée (16) entre deux zones de production, ledit procédé comprenant les étapes consistant :
à utiliser un moyen accumulateur avec une entrée amont et une sortie aval, et situé le long du côté du moyen à bande transporteuse (12), entre les deux zones de production, de manière que l'une desdites zones soit en amont de l'entrée du moyen accumulateur et que l'autre zone de production soit en aval de ladite sortie du moyen accumulateur, ledit moyen accumulateur étant à même de retirer de manière contrôlée des produits (14) du moyen à bande transporteuse (12) s'il y a un encombrement de produits (14) acheminé à la zone de production aval, et
à retirer de manière contrôlée des produits (14) du moyen à bande transporteuse (12) par le moyen accumulateur si une file de produits se développe à l'intérieur du moyen accumulateur entre sa sortie et son entrée, ladite étape de retrait comprenant l'établissement d'un point de capture d'entrée (A) qui est situé le long du moyen à bande transporteuse (12) à une distance prédéterminée en amont de l'entrée du moyen accumulateur, et la réalisation d'un déplacement en aval relatif suivant de la file de produits, le procédé étant caractérisé en ce que :
le point de capture d'entrée (A) est établi par engagement du bord avant d'un produit quelconque (14) transporté contre ledit point par le moyen à bande transporteuse (12), et
à déplacer relativement la file de produits (14) sur une certaine distance en aval de telle sorte que tous les produits (14) situés en aval du point de capture d'entrée (A) et non engagés dans celui-ci soient transportés en aval au moins vers l'entrée du moyen accumulateur, de telle sorte que les produits (14) puissent être retirés sans dommage du moyen à bande transporteuse (12) par le moyen accumulateur quelle que soit la position relative des produits (14) à l'entrée du moyen accumulateur, chaque fois que l'étape de retrait commence, ladite distance étant sélectionnée pour être au moins aussi grande que la longueur nominale des produits individuels (14) transportés via le moyen à bande transporteuse (12).

2. Procédé selon la revendication 1, dans lequel ladite distance se situe de manière générale dans une plage d'environ 3 à environ 10 cm.

3. Procédé selon la revendication 1, dans lequel ladite distance est sélectionnée pour être généralement à peu près la longueur nominale du produit additionnée à ladite distance prédéterminée.

4. Procédé selon la revendication 3, dans lequel la distance est sélectionnée par l'utilisateur et se situe de manière générale dans une plage d'environ 1,3 à environ 1,7 fois la longueur nominale du produit.

5. Procédé selon la revendication 1, dans lequel:
ladite étape d'engagement comprend l'injection d'un élément d'engagement (32) partiellement dans le trajet des produits de telle sorte qu'une largeur adéquate subsiste pour que les produits (14) puissent passer par ledit élément d'engagement (32) si le bord avant d'un tel produit (14) est déjà passé par celui-ci, et, en amont de cet élément, le guidage des produits relativement en amont sur le moyen à bande transporteuse (12) vers ledit élément d'engagement (32) de manière qu'ils soient engagés sur celui-ci;
ladite distance prédéterminée n'est de manière générale pas supérieure à environ 1,7 fois la longueur nominale des produits (14) qui sont transportés via le moyen à bande transporteuse (12), et
ladite distance adéquate est sélectionnée par l'utilisateur et se situe de manière générale dans une plage d'environ 1,3 à environ 1,7 la longueur nominale des produits, de telle sorte que les produits soient déplacés de manière générale d'environ une longueur nominale du produit et d'environ une telle distance prédéterminée.

6. Procédé selon la revendication 5, dans lequel:
ledit moyen accumulateur comprend un mécanisme de transport généralement vertical portant une série d'ailes espacées (26) s'étendant vers l'extérieur pour accumuler des produits entre lesdites ailes voisines (26),
ladite étape de retrait comprend la mise en mouvement intermittent dudit mécanisme de transport vertical de manière à retirer des produits (14) du moyen à bande transporteuse (12), et
ledit procédé comprend par ailleurs l'étape de renvoi sélectif au moyen à bande transporteuse (12) de produits qui en ont été précédemment retirés par le moyen accumulateur, chaque fois qu'aucun produit (14) ne se trouve dans ledit moyen accumulateur sur le moyen à bande transporteuse (12).

7. Procédé selon la revendication 6, dans lequel:
ledit procédé comprend par ailleurs l'étape de retenue sélective de tous les produits (14) émergeant de l'extrémité aval du moyen accumulateur au cours d'opérations de fonctionnement normales de manière à maintenir un intervalle de distance prédéterminé entre chaque nombre prédéterminé de produits (14) se déplaçant vers la zone de production aval depuis l'extrémité aval du moyen accumulateur, en s'assurant de la présence dudit intervalle de distance prédéterminé avant la libération dudit nombre prédéterminé suivant de produits (14), et
dans lequel ladite étape de retrait comprend le retrait de produits (14) si la file de produits (14) se développe dans le moyen accumulateur avant que l'intervalle de distance prédéterminée n'apparaisse entre des produits (14) émergeant de l'extrémité aval du moyen accumulateur.

8. Procédé selon la revendication 6, comprenant par ailleurs l'étape visant à munir le moyen accumulateur d'une plaque de transfert mobile située de manière opératoire par rapport au moyen à bande transporteuse (12) et aux extrémités distales des ailes (26) s'étendant vers l'extérieur du moyen accumulateur, et comprenant l'étape de commande de la position d'une telle plaque de transfert mobile au cours des opérations de retrait et de renvoi des produits (14) pour empêcher l'apparition de points de cisaillement latéraux pour les produits (14) lorsqu'ils sont déplacés dans d'autres directions.

9. Procédé de contrôle de surcharge selon la revendication 1, consistant notamment à empêcher tous les produits (14) de quitter le côté de sortie du moyen accumulateur, et
à lancer une séquence de retrait de produits si l'étape de prévention entraîne la formation d'une file de produits (14) s'étendant à travers le moyen accumulateur de son côté de sortie à son côté d'entrée,
l'étape de prévention étant réalisée au cours d'opérations de fonctionnement normales jusqu'à ce que des nombres prédéterminés de produits (14), qui en ont été préalablement libérés, soient passés par un point de détection le long du transporteur (12) une distance prédéterminée en aval vers le deuxième poste de travail à partir du moyen accumulateur, de manière à maintenir un intervalle de distance prédéterminé entre des nombres prédéterminés de produits (14) émergeant du côté de sortie du moyen accumulateur, cette séquence de retrait de produits comprenant le réglage d'un piège au point de capture (A) pour le bord avant du produit suivant qui se rapproche du point de capture depuis la direction du premier poste de travail, le déplacement relatif des produits (14) à l'intérieur de la file du moyen accumulateur sur une distance en aval telle que les produits (14), dont une partie quelconque est située en aval du point de capture (A), soient déplacés au-delà du point de cisaillement du côté d'entrée du moyen accumulateur tandis que les produits en amont du point de capture (A) y sont capturés, et, ensuite, la mise en action du moyen accumulateur pour retirer des produits (14) du transporteur (12) dans le moyen accumulateur de telle sorte que ces produits (14) soient isolés de la pression de ligne le long du transporteur (12) et soient dirigés positivement au-delà de points de cisaillement potentiels de produits quelle que soit leur position initiale, de manière à empêcher leur endommagement aux points de cisaillement au cours de leur retrait, et ladite distance étant sélectionnée pour être au moins aussi grande que la longueur nominale des produits individuels (14) qui sont transportés via le moyen à bande transporteuse (12).

10. Procédé selon la revendication 9, dans lequel le réglage dudit piège comprend l'injection d'un élément d'arrêt (32) en travers d'une partie du transporteur (12), la largeur restante du transporteur étant plus grande que la largeur nominale (38) des produits individuels (14) s'avançant le long du transporteur (12), de telle sorte que les produits (14) heurtés latéralement par un tel élément d'arrêt (32) continuent tandis qu'un produit (14) dont le bord avant heurte un tel élément d'arrêt (32) y soit piégé.

11. Procédé selon la revendication 10, dans lequel le réglage dudit piège comprend l'injection d'un élément de guidage (40) en travers d'une partie du transporteur (12) relativement en amont de l'élément d'arrêt (32) de manière à guider les produits (14) en amont de celui-ci pour qu'ils engagent ensuite leur bord avant sur un tel élément d'arrêt (32) afin d'être piégés.

12. Procédé selon la revendication 11, dans lequel ladite distance en aval se situe généralement dans une plage d'environ 1,3 à environ 1,7 fois la longueur nominale des produits.

13. Procédé selon la revendication 10, dans lequel le réglage dudit piège comprend la déviation de produits (14), juste en aval dudit élément d'arrêt (32), pour les écarter d'un bord latéral (76) du transporteur (12) plus près dudit élément d'arrêt (32), pour compenser le fonctionnement dudit élément de guidage (34) sur des produits non piégés.

14. Procédé selon la revendication 10, dans lequel :
le moyen accumulateur comprend un dispositif de type escalator généralement vertical ayant une bande mobile portant une série d'éléments s'étendant vers l'extérieur et formant des ailes (26), entre lesquelles des groupes de produits (14) peuvent être positionnés et accumulés hors ligne du transporteur (12),
ledit moyen accumulateur comprenant par ailleurs des moyens de freinage de sortie (82) pour arrêter sélectivement le flux de produits (14) sur le côté de sortie du moyen accumulateur et,
dans lequel ledit procédé comprend par ailleurs le renvoi au transporteur de produits (14) qui en ont été précédemment retirés chaque fois qu'il n'y a pas de produits (14) entre les côtés d'entrée et de sortie du moyen accumulateur.

15. Procédé selon la revendication 10, dans lequel les produits comprennent des récipients de papier aseptisé, le premier poste de travail comprend une machine de remplissage et le deuxième poste de travail comprend un applicateur de paille et une machine d'emballage, et dans lequel l'étape de prévention comprend la libération de produits (14) par groupes d'un nombre prédéterminé.

16. Procédé de contrôle de surcharge selon la revendication 1 ou 9, comprenant le retrait de manière contrôlée de produits (14) du moyen à bande transporteuse (12) par le moyen accumulateur si une file de produits (14) se développe dans le moyen accumulateur avant que des produits (14) émergeant du moyen accumulateur ne puissent avancer vers la zone de production aval, dans lequel :
ledit moyen accumulateur comprend un mécanisme de transport généralement vertical portant une série d'ailes espacées (26) s'étendant vers l'extérieur pour accumuler des produits (14) entre de telles ailes voisines (26), ladite étape de retrait comprenant la mise en mouvement intermittent d'un tel mécanisme de transport vertical de manière à retirer du moyen à bande transporteuse (12) une ligne de produits (14) en file dans le moyen accumulateur afin de former un bouchon de produits (14) s'étendant de manière générale sur la longueur du mécanisme de transport vertical, et dans lequel :
ledit moyen accumulateur comprend par ailleurs un mécanisme de déplacement de sortie (82) qui se trouve relativement juste en aval des bords aval d'une série d'ailes (26) s'étendant vers l'extérieur, et dont le fonctionnement permet de retirer des produits (14) par le moyen accumulateur pour permettre un déplacement relativement en aval sur une distance totale présélectionnée au cours de l'étape de retrait avant la mise en mouvement intermittent du mécanisme de transport vertical, tandis que le flux d'autres produits (14) se rapprochant du moyen accumulateur est arrêté, ladite distance totale présélectionnée comprenant la longueur d'un produit (14) porté sur le moyen à bande transporteuse (12) additionnée d'une distance fixe prédéterminée, de manière à empêcher positivement l'apparition de points de cisaillement des produits sur les bords aval et amont des ailes (26) au cours de l'étape de retrait quelles que soient les positions initiales des produits le long du moyen à bande transporteuse (12).

17. Procédé selon la revendication 16, comprenant par ailleurs :
la retenue sélective de produits (14) émergeant de l'extrémité aval du moyen accumulateur de manière à maintenir un intervalle de distance prédéterminé entre des produits voisins (14) ou des groupes prédéterminés de produits (14) se déplaçant vers la zone de production aval, et dans lequel :
ladite étape de retrait comprend le retrait de produits (14) du moyen à bande transporteuse (12) si une file de produits (14) se développe dans le moyen accumulateur avant que l'intervalle de distance prédéterminé n'apparaisse entre les produits (14) ou lesdits groupes prédéterminés de produits (14) émergeant du moyen accumulateur, et dans lequel :
ledit procédé comprend par ailleurs la retenue d'au moins un produit immédiatement au voisinage du mécanisme de déplacement de sortie (82) au cours de l'étape de retrait, et ensuite le déplacement de ces produits retenus (14) relativement en amont de manière à rétablir l'intervalle de distance prédéterminé à maintenir, ledit intervalle étant autrement réduit chaque fois que les produits sont initialement autorisés à se déplacer relativement en aval contre ledit mécanisme de déplacement de sortie (82).

18. Procédé selon la revendication 16, comprenant par ailleurs des moyens de capture d'entrée (66) situés en amont du moyen accumulateur à approximativement ladite distance fixe prédéterminée, pour arrêter le produit suivant (14) situé en amont de celui-ci et dont le bord avant n'a pas encore atteint ledit moyen de capture d'entrée (66), de telle manière que ledit moyen de capture d'entrée (66) puisse arrêter un tel produit (14) sans lui appliquer de force d'immobilisation quelconque ou à d'autres produits quelconques (14) transportés via le moyen à bande transporteuse (12).

19. Procédé selon la revendication 9, dans lequel ladite étape de réglage du piège est réalisée par un piégeage sans pinçage du bord avant d'un produit se rapprochant d'un point de capture sélectionné (A) en amont dudit moyen accumulateur,
dans lequel le moyen accumulateur comprend un dispositif de type escalator généralement vertical ayant une bande mobile portant une série d'éléments (26) s'étendant vers l'extérieur qui y forment des ailes, entre lesquelles des groupes de produits (14) peuvent être positionnés et accumulés hors ligne du transporteur (12), et dans lequel ledit moyen accumulateur comprend par ailleurs un moyen d'arrêt d'entrée (32) sans pinçage des produits et un moyen de freinage de sortie (90) pour interrompre sélectivement le flux de produits sur les côtés d'entrée et de sortie, respectivement, de l'appareil, et
dans lequel l'étape de déplacement comprend la mise en place d'un élément de déplacement de sortie ajustable (94) dans le trajet d'écoulement des produits (14) le long du transporteur (12) à un point sélectionné qui se trouve relativement juste en aval du moyen de freinage de sortie (90), et, ensuite, la libération du moyen de freinage de sortie (90) pour permettre à la file de produits s'étendant à travers le moyen accumulateur de se déplacer vers le bas de manière à s'engager sur ledit élément de déplacement de sortie (94) dans sa position déplacée aval, de telle sorte que ces produits (14) soient déplacés en aval sur ladite distance totale présélectionnée qui correspond à la longueur d'un de ces produits (14) à laquelle on a ajouté une distance fixe prédéterminée, de telle manière que les produits (14) qui se trouvent en amont de celui-ci puissent être nettement retirés du transporteur (12) sans endommagement du produit (14) aux points de cisaillement.

20. Procédé selon la revendication 19, dans lequel :
ledit moyen d'arrêt d'entrée (32) sans pinçage des produits est situé en amont du moyen accumulateur à environ ladite distance fixe prédéterminée, et opère pour stopper le bord avant du produit (14) suivant qui se rapproche sans interrompre le déplacement d'un produit quelconque (14) dont le bord avant est déjà passé par ledit moyen d'arrêt d'entrée (32),
la longueur nominale des produits individuels qui sont acheminés le long du transporteur (12) à un moment donné se situe de manière générale dans une plage d'environ 3,81 à 7,62 cm (1,5 pouce à environ 3 pouces), et
la distance de déplacement aval de l'élément de déplacement de sortie (94) est ajustée pour s'adapter à la longueur nominale du produit.

21. Procédé selon la revendication 20, dans lequel, après le retrait des produits (14) du transporteur (12), au moins un produit (14) déplacé en aval au-delà du moyen accumulateur est repositionné en amont par un fonctionnement inverse de l'élément de déplacement de sortie (94) et ensuite réimmobilisé par le moyen de freinage de sortie (92), après quoi, par ailleurs, l'élément de déplacement de sortie (94) est retiré du trajet d'écoulement des produits le long du transporteur (12) jusqu'à ce qu'une autre séquence de retrait de produits soit initiée, de telle manière que ces étapes de repositionnement en amont et de réimmobilisation permettent d'effectuer une autre étape de déplacement en aval pour des séquences de retrait de produits suivantes.

22. Moyen accumulateur pour un appareil de manipulation de produits agencé pour réaliser le procédé selon la revendication 9 par rapport à un produit d'une longueur nominale prédéterminée, le moyen étant généralement du type ayant un transporteur orienté verticalement portant une série d'ailes espacées (26) s'étendant vers l'extérieur pour accumuler des produits (14) entre elles, avec un mouvement intermittent dudit transporteur (12) dans des directions sélectionnées, qui entraîne en alternance le retrait ou le retour des produits (14) par rapport à une surface de transport d'une chaîne de production à laquelle ce moyen accumulateur est associé de telle manière que, étant donné que les ailes d'extension (26) peuvent être situées dans une position neutre pour le passage des produits (14) portés sur la chaîne de production, ces ailes (26) jouant le rôle de rails de guidage, et un moyen de déplacement de sortie (82) relativement proche de la sortie du moyen accumulateur et opérant pour déplacer sélectivement des produits (14) sur une distance aval sélectionnée, caractérisé par un moyen de capture de produits d'entrée (32) relativement voisin de l'entrée du moyen accumulateur à une distance amont sélectionnée de celui-ci, et le moyen de capture d'entrée (32) étant opérant pour capturer sélectivement, sans utilisation d'une force d'immobilisation, le bord avant du produit suivant (14) ayant son bord avant en amont de celui-ci, ladite distance aval sélectionnée est au moins aussi grande que la longueur nominale des produits de la chaîne de production de telle manière que la commande en coopération dudit moyen de déplacement de sortie (82) et dudit moyen de capture de produits d'entrée empêche l'apparition de points de cisaillement des produits au voisinage de bords d'entrée des ailes (26) du transporteur.

23. Moyen accumulateur selon la revendication 22, dans lequel la distance est égale à la longueur nominale des produits de la chaîne de production additionnée à une distance amont sélectionnée.

24. Moyen accumulateur selon la revendication 23, dans lequel ladite distance amont sélectionnée se situe de manière générale dans la plage d'environ 30 à environ 70 % de la longueur nominale du produit de la chaîne de production.

25. Moyen accumulateur selon la revendication 24, dans lequel la distance de déplacement dudit moyen de déplacement est ajustable de manière à recevoir des moyens accumulateurs utilisés avec différentes longueurs de produits et une distance sélectionnée en amont.

26. Moyen accumulateur selon l'une quelconque des revendications 22 à 25, dans lequel ledit moyen de déplacement de sortie peut être, de manière sélective, étendu en position d'engagement de produit par rapport à la surface de transport (12). de la chaîne de production et en être retiré, et dans lequel ledit moyen de déplacement de sortie (82) comprend une commande à piston (98) pour contrôler sélectivement le déplacement, dont les positions en extension et en retrait sont toutes deux ajustables, de telle manière que ladite distance aval sélectionnée et ledit emplacement par rapport à la chaîne de production puissent tous deux être ajustés.

27. Moyen accumulateur selon l'une quelconque des revendications 22 à 25, dans lequel ledit moyen de capture de produits d'entrée (32) comprend un premier et un deuxième éléments opérant sur des côtés latéraux opposés de la chaîne de production, où ledit premier élément comprend une plaque d'arrêt (32) qui est injectée en travers d'une partie limitée de la surface de transport (12) de la chaîne de production de telle sorte qu'il subsiste un espace qui soit plus grand que la largeur nominale (38) d'un produit (14) de la chaîne de production, et où ledit deuxième élément est relativement en amont dudit premier élément et comprend un guide déflecteur (34) qui est injecté en travers d'une partie limitée de la surface porteuse (12) de la chaîne de production de telle sorte qu'il subsiste un espace qui soit plus grand que la largeur nominale du produit, l'injection dudit deuxième élément amenant cependant des produits (14) à heurter un tel guide déflecteur (34) pour se déplacer vers une partie de la surface de transport (12) de la chaîne de production, ce qui entraîne ensuite l'engagement de ladite plaque latérale (32) sur le bord avant de ces produits (14).

28. Moyen accumulateur selon la revendication 27, dans lequel ladite plaque d'arrêt (32) et ledit guide déflecteur (34) sont respectivement injectés par des commandes à piston qui sont commandés en commun.

29. Appareil de manipulation de produits pour commander le flux de produits (14) s'avançant le long d'un transporteur (12) d'un premier poste de travail à un deuxième poste de travail conformément au procédé de la revendication 9, ledit appareil comprenant :
un moyen accumulateur selon la revendication 22 voisin du transporteur (12) entre le premier et le deuxième postes de travail, pour retirer et renvoyer en alternance et de manière contrôlée des produits (14) par rapport au transporteur (12), ledit moyen accumulateur ayant des côtés d'entrée et de sortie respectifs généralement entre lesquels des produits (14) peuvent être retirés et renvoyés au transporteur (12) en alternance,
un moyen de capture d'entrée (10) sans pincement des produits associé audit côté d'entrée du moyen accumulateur, qui est actionné de manière contrôlée pour arrêter, sans appliquer de force d'immobilisation, l'entrée de produits (14) le long du transporteur (12) dans ledit côté d'entrée du moyen accumulateur, lesdits produits (14) ayant encore leurs bords avant en amont dudit moyen de capture (10),
un moyen de freinage de sortie (90) associé audit côté de sortie du moyen accumulateur, qui peut être actionné de manière contrôlée pour arrêter les produits (14) le long du transporteur d'émerger dudit côté de sortie du moyen accumulateur,
un moyen de détection aval situé le long du côté du transporteur (12) sur une distance prédéterminée en aval dudit côté de sortie du moyen accumulateur pour détecter le passage de produits (14) par celui-ci,
un moyen de déplacement de sortie (82), qui peut être actionné de manière contrôlée pour se déplacer sélectivement dans le trajet de produits (14), et hors de celui-ci, le long du transporteur (12) en aval dudit moyen de freinage de sortie (90) et en amont dudit moyen de détection aval, ledit moyen de déplacement de sortie (82) pouvant être également actionné de manière contrôlée pour déplacer relativement en aval des produits (14) le long du transporteur (12), sur une distance ajustable sélectionnée par l'utilisateur plus grande qu'au moins la longueur d'un des produits (14) avançant le long du transporteur (12), et
un moyen de commande associé en fonctionnement audit moyen accumulateur, audit moyen de capture d'entrée (32) sans pinçage des produits, audit moyen de freinage de sortie (90), audit moyen de détection aval et audit moyen de déplacement de sortie (82) respectivement, pour accumuler momentanément des produits (14) hors ligne du transporteur (12) chaque fois que des nombres excessifs de produits (14) font la file entre le premier et le deuxième postes de travail,
dans lequel ledit moyen de commande opère en mode de fonctionnement normal pour activer et désactiver en alternance ledit moyen de freinage de sortie (90) pour empêcher les produits (14) de quitter ledit côté de sortie dudit moyen accumulateur jusqu'à ce qu'un nombre prédéterminé de produits précédemment libérés soit passé par ledit moyen de détection, et dans lequel ledit moyen de commande opère en mode de retrait de produits chaque fois que l'actionnement dudit moyen de freinage de sortie (90) en mode de fonctionnement normal entraîne la formation d'une file de produits (14) s'étendant en travers le moyen accumulateur de son dit côté de sortie à son dit côté d'entrée,
et dans lequel ledit mode de retrait de produits comprend l'actionnement dudit moyen de capture d'entrée (10) sans pinçage de produits pour arrêter le bord avant du produit aval immédiatement voisin (14) sur le transporteur (12) d'entrer dans ledit côté d'entrée du moyen accumulateur, désactiver ledit moyen de freinage de sortie (90) et activer ledit moyen de déplacement de sortie (82) de manière à permettre le déplacement relatif de produits (14) sur le transporteur (12) à l'intérieur dudit moyen accumulateur en aval sur ladite distance ajustable sélectionnée par l'utilisateur, et commander ledit moyen accumulateur pour retirer lesdits produits (14) du transporteur (12), de telle sorte que les points de cisaillement de produits soient positivement éliminés au cours du retrait des produits quelle que soit la position initiale des produits (14) par rapport au côté d'entrée du moyen accumulateur ou le nombre de produits (14) retirés au cours d'une séquence donnée de retrait de produits.

30. Appareil de manipulation de produits selon la revendication 29, dans lequel :
ledit moyen de commande fonctionne au cours de l'absence de produits quelconques (14) sur le transporteur (12) à l'intérieur dudit moyen accumulateur de manière à renvoyer audit transporteur (12) les produits (14) qui en ont été précédemment retirés par ledit moyen accumulateur,
ledit moyen accumulateur comprend des éléments de guidage fixes (24, 86) généralement perpendiculaires à la direction d'avancement (16) du transporteur (12) et séparés d'une distance prédéterminée par les bords respectifs d'entrée et de sortie des ailes (26), s'étendant vers l'extérieur, dudit mécanisme de transport vertical de manière à empêcher le dégagement de produits (14) desdites ailes (46) sur leurs bords d'entrée et de sortie,
ledit moyen de capture d'entrée (32) sans pinçage des produits est situé à une distance prédéterminée en amont des bords d'entrée desdites ailes (26), s'étendant vers l'extérieur, du mécanisme de transport vertical, et
ladite distance de déplacement en aval est égale de manière générale à la longueur nominale des produits individuels avançant le long du transporteur (12) ajoutée à ladite distance prédéterminée, de telle sorte que les produits (14) à accumuler soient avancés de manière positive au moins en aval au-delà de l'élément de guidage fixe (24) sur le côté d'entrée du moyen accumulateur afin d'empêcher l'apparition de points de cisaillement de produits quelconques entre ces éléments de guidage et les produits en cours d'accumulation, et, en option, les produits (12) s'avançant le long du transporteur comprennent des emballages à base de papier ayant une longueur nominale d'environ 3,81 à 7,62 cm (1,5 pouce à environ 3 pouces) et qui sont remplis de matières liquides, le premier poste de travail comprend une machine de remplissage, le deuxième poste de travail comprend un applicateur de paille ou une machine d'emballage, et ledit nombre prédéterminé de produits précédemment libérés est de 3.

31. Appareil de manipulation de produits selon la revendication 30, dans lequel ledit moyen de déplacement de sortie (82) comprend :
un élément d'engagement contrôlé de produits (94),
un moyen de commande d'engagement (96) pour positionner sélectivement ledit élément d'engagement de produits (94) entre une première position relativement juste en aval du moyen accumulateur et relativement près du transporteur (12) de manière à arrêter l'avancement de produits (14) le long de celui-ci, et une deuxième position décalée de manière adéquate du transporteur (12) de manière à venir en contact avec les produits (14) qui s'y trouvent, et
un moyen de commande de déplacement (98) pour déplacer sélectivement ledit élément d'engagement de produits (94) contre lequel les produits sont reçus entre ladite première position, et une troisième position relativement voisine du transporteur (12) de manière à arrêter l'avancement de produits (14) le long de celui-ci et en aval de ladite première position d'une distance de déplacement totale comprenant une distance de déplacement minimale prédéterminée ajoutée à la longueur nominale d'un produit (14) déplacé sur le transporteur (12).

32. Appareil de manipulation de produits selon la revendication 30, dans lequel ledit moyen de capture d'entrée (10) sans pinçage des produits comprend une paire de premier et deuxième éléments (32, 34) opérant sur les côtés latéraux opposés du transporteur (12), où ledit premier élément comprend une plaque d'arrêt (32) qui est injectée en travers d'une partie limitée du transporteur (12) de telle sorte qu'il subsiste un espace qui soit plus grand que la largeur nominale (38) d'un produit (14) en cours d'avancement, et où ledit deuxième élément (34) est relativement en amont dudit premier élément (32) et comprend un guide déflecteur (34) qui est injecté en travers d'une partie limitée du transporteur (12) de telle sorte qu'il subsiste un espace qui soit plus grand que la largeur nominale (38) du produit, l'injection dudit deuxième élément (34) amenant des produits (14) à heurter ledit guide déflecteur (34) pour se déplacer sur une partie du transporteur (12), ce qui entraîne ensuite l'engagement du bord avant de l'un quelconque de ces produits sur ladite plaque d'arrêt (32).

33. Moyen ou appareil de manipulation de produits selon l'une quelconque des revendications 22 à 32, comprenant un appareil d'engagement de produits d'entrée comprenant :
un moyen d'interruption (32) pour interrompre sélectivement le déplacement des produits dans au moins une première partie du trajet de déplacement du transporteur (12) située relativement en amont du moyen accumulateur, et
un moyen de guidage (34) situé relativement en amont dudit moyen d'interruption (32) pour guider sélectivement les produits portés sur le transporteur (12) dans la première partie du trajet, de telle sorte que le mouvement aval de ces produits guidés (14) soit ensuite interrompu par ledit moyen d'interruption (32).

34. Moyen ou appareil de manipulation de produits selon la revendication 33, dans lequel ledit moyen d'interruption (32) comprend un élément d'arrêt mobile (32) pour un mouvement contrôlé entre une première position latéralement voisine du trajet du transporteur et une deuxième position s'étendant en travers d'une partie du trajet de transporteur comprenant ladite première partie, de telle sorte que la partie restante non interrompue du trajet du transporteur ait une largeur supérieure à la largeur nominale (38) des produits (14) acheminés le long du transporteur (12).

35. Moyen ou appareil de manipulation de produits selon la revendication 33 ou 34, dans lequel ledit élément d'arrêt mobile (32) comprend une plaque glissante (32) actionnée par un piston et s'étendant sensiblement perpendiculairement au trajet du transporteur et, par exemple, le piston (68) de ladite plaque glissante (32) est orienté généralement à peu près à angle droit avec la ligne de mouvement (16) de ladite plaque (32) et est associé à des moyens pour convertir le mouvement de ce piston (16) en mouvement de ladite plaque le long de sa ligne de mouvement.

36. Moyen ou appareil de manipulation de produits selon la revendication 33 ou 34, comprenant par ailleurs un moyen déflecteur fixe (74) monté relativement en aval dudit élément d'arrêt mobile (32) et s'étendant dans une partie du trajet du transporteur qui est interrompue chaque fois que ledit élément d'arrêt mobile (32) assume sa dite première position, pour dévier des produits (14) du bord latéral (76) du trajet du transporteur dont ledit élément d'arrêt mobile (32) est voisin.

37. Moyen ou appareil de manipulation de produits selon la revendication 33 ou 34, dans lequel ledit moyen de guidage (10) comprend un élément de guidage mobile de produits (34) pour effectuer un mouvement contrôlé entre une première position latéralement voisine du trajet du transporteur sur son côté opposé audit élément d'arrêt mobile (32) et une deuxième position s'étendant en travers d'une partie du trajet du transporteur de telle sorte que les produits (14) qui *s'y* trouvent soient guidés vers ladite première partie du trajet, et par exemple ledit élément de guidage mobile de produits comprend un élément en forme de coin (34) actionné par un piston, dont la commande est coordonnée avec la commande dudit élément d'arrêt mobile (32).

38. Moyen ou appareil de manipulation de produits selon l'une quelconque des revendications 22 à 36, comprenant un appareil d'engagement de produits de sortie comprenant :
un élément d'engagement contrôlé de produits (94), un moyen de commande d'engagement (96) pour positionner sélectivement ledit élément d'engagement de produits (94) entre sa première position relativement juste en aval du moyen accumulateur et relativement au voisinage du transporteur (12) de manière à arrêter le mouvement de produits (14) le long de son trajet, et une deuxième position décalée de manière adéquate du transporteur (12) de manière à ne pas venir en contact avec les produits (14) qui s'y trouvent, et comprenant :
un moyen de commande de déplacement (98) pour déplacer sélectivement ledit élément d'engagement de produits (94) avec des produits reçus contre lui entre sa dite première position, et sa troisième position relativement voisine du transporteur (12) de manière à arrêter le mouvement de produits (14) le long de celui-ci et en aval le long de ladite première position sur une distance de déplacement totale comprenant une distance de déplacement minimale prédéterminée ajoutée à la longueur d'un produit (14) en cours de déplacement sur le transporteur (12), tout en contrôlant l'acheminement de produits (14) dans l'extrémité amont du moyen accumulateur de telle sorte que les produits (14) à retirer du transporteur (12) par le moyen accumulateur puissent être déplacés de manière contrôlée par rapport à celui-ci avant ledit retrait afin d'empêcher des points de cisaillement de produits entre le moyen accumulateur et ces produits (14) et entre le moyen accumulateur et les produits (14) restant sur le transporteur (12).

39. Moyen ou appareil de traitement de produits selon la revendication 38, dans lequel ledit moyen de commande de déplacement (98) comprend un moyen d'ajustement de déplacement pour ajuster au gré de l'utilisateur la distance de déplacement totale.

40. Moyen ou appareil de manipulation de produit selon la revendication 39, dans lequel ledit moyen de commande de déplacement (98) comprend une commande de piston contrôlée pour déplacer de manière contrôlée ledit élément d'engagement de produits, et ledit moyen d'ajustement de déplacement (98) comprend un élément d'arrêt ajustable (118), dont la position, sélectionnée par l'utilisateur, établit ladite troisième position dudit élément d'engagement de produits (94), de telle sorte qu'un utilisateur puisse ajuster de manière sélective ladite distance de déplacement totale, l'appareil comprenant par ailleurs en option un moyen d'ajustement de première position (130) pour ajuster, au gré de l'utilisateur, la position de ladite commande de piston contrôlée, afin qu'un utilisateur puisse ajuster sélectivement ladite première position de l'élément d'engagement de produits (94).

41. Moyen ou appareil de manipulation de produits selon la revendication 38, dans lequel :
ledit moyen de commande d'engagement (96) est actionné par un premier piston (110) ayant un axe généralement vertical perpendiculaire au trajet du transporteur, ledit premier piston (110), lorsqu'il est en extension, plaçant ledit élément d'engagement de produits (94) dans sa dite première position et, lorsqu'il est en retrait, plaçant ledit élément d'engagement de produits (94) dans sa dite deuxième position, et
ledit moyen de commande de déplacement (98) est actionné par un deuxième piston (128) ayant un axe généralement horizontal parallèle au trajet du transporteur, ledit deuxième piston (128), lorsqu'il est en extension, plaçant ledit élément d'engagement de produits (94) dans sa dite première position et, lorsqu'il est en retrait, plaçant ledit élément d'engagement de produits (94) dans sa dite troisième position, et en option:
lesdits premier et deuxième pistons (110, 128) peuvent être actionnés de manière simultanée pour un mouvement simultané dudit élément d'engagement de produits (94) le long de deux axes, et
ledit premier piston (110) comprend au moins un montage pivotant par rapport audit élément d'engagement de produits (94) de manière à permettre l'ajustement au gré de l'utilisateur de l'emplacement de ladite première position par rapport à une extrémité aval du moyen accumulateur.

42. Procédé selon la revendication 1, dans lequel ladite étape d'engagement comprend la restriction partielle du trajet de produits sur le moyen à bande transporteuse (12) sans appliquer de force d'immobilisation aux produits (14), et l'injection d'un élément d'engagement (32) partiellement dans le trajet de produits de telle sorte qu'il subsiste une largeur adéquate pour les produits (14) pour qu'ils passent par ledit élément d'engagement (32) si le bord avant de ces produits (14) est déjà passé par celui-ci, tandis qu'en amont dudit élément d'engagement (32), on guide les produits (14) relativement en amont sur le moyen à bande transporteuse vers cet élément d'engagement (32) de manière qu'ils soient engagés sur celui-ci.
